# EUROPEAN PATENT SPECIFICATION

(11) **EP 4 488 089 B1**
(45) Date of publication and mention of the grant of the patent: **08.10.2025**
(21) Application number: 24183912.5
(22) Date of filing: 24.06.2024
(51) Int. Cl.: B60K 1/04

(54) **CABIN STRUCTURE OF VEHICLE AND METHOD OF MANUFACTURING A VEHICLE**
KABINENSTRUKTUR EINES FAHRZEUGS UND VERFAHREN ZUR HERSTELLUNG EINES FAHRZEUGS
STRUCTURE DE CABINE DE VÉHICULE ET PROCÉDÉ DE FABRICATION D'UN VÉHICULE

(30) Priority: 03.07.2023 JP 2023109308; 03.07.2023 JP 2023109309; 03.07.2023 JP 2023109310; 03.07.2023 JP 2023109311
(43) Date of publication of application: 08.01.2025
(73) Proprietor: MAZDA MOTOR CORPORATION, Hiroshima 730-8670 (JP)
(72) Inventor: IOKA, Tadashi, Aki-gun, Hiroshima, 730-8670 (JP); FUKUSHIMA, Yoshio, Aki-gun, Hiroshima, 730-8670 (JP)
(74) Representative: Müller-Boré & Partner Patentanwälte PartG mbB

(56) References cited:
- DE-B4- 102011 119 540
- JP-A- 2005 071 759
- JP-A- 2009 029 159
- US-A1- 2008 062 622
- US-A1- 2013 126 254

## Description

The present invention relates to a cabin structure of a vehicle, comprising a battery for drive which is installed above a floor of the vehicle, such as a hybrid vehicle or an electric automobile. The present invention also relates to a method of manufacturing a vehicle.

### BACKGROUND OF THE INVENTION

It is known, as exemplified by Japanese Patent Laid-Open Publication No. 2005-71759, that the battery for drive is arranged above a rear floor in a cabin in the hybrid vehicle, the electric automobile, or the like.

However, this arrangement of the battery for drive above the rear floor causes a floor surface of a baggage compartment in the cabin to be located at a high level improperly, so that there is a problem that the substantial height of a baggage space may be decreased. In a stylishness-oriented vehicle with a relatively low roof height, in particular, this problem may become dominant.

Meanwhile, a structure in which the battery for drive, i.e., the battery case for this battery, is arranged in a space below a seat cushion of a rear seat provided above the floor has been proposed as disclosed in Japanese Patent Laid-Open Publication No. 2009-29159. This structure, however, increases the height of the rear-seat cushion improperly, so that a head clearance of a passenger seated in the rear seat may be deteriorated.

Moreover, even in a case where a seatback of the rear seat is configured to be forward foldable so that the substantially-flat floor surface of the baggage compartment can be enlarged over an arrangement area of the rear seat in the cabin, the above-described layout of the battery (battery case) installed above the floor may hinder this enlargement trial of the flat floor surface of the baggage compartment. A pertinent cabin structure is known from DE 10 2011 119540.

### SUMMARY OF THE INVENTION

The present invention has been devised in view of the above-described problems, and an object of the present invention is to form the substantially-flat and/or enlarged floor surface of the baggage compartment, ensuring the height of the baggage space and the head clearance of the passenger seated in the rear seat, without deteriorating the battery volume, in a forward-folded state of the seatback of the rear seat.

Another object of the present invention is to ensure the essential function of a center console even if the battery (case) is expanded and enlarged forward.

Further another object of the present invention is to make the battery case storing the battery for drive and improve the vehicle-body rigidity.

The present invention is defined in independent claims. Particularly, a cabin structure of a vehicle, which is provided with a floor forming a bottom face of a cabin, right-and-left front seats arranged to be laterally separated above a front part of the floor, a front-seat center console interposed between the right-and-left front seats, right-and-left rear seats arranged to be laterally separated above a rear part of the floor behind a kick-up portion and configured to be forward foldable, and a rear-seat center console interposed between the right-and-left rear seats, includes a first battery for drive provided above a baggage-compartment part of the floor behind seatbacks of the rear seats and extending in a vehicle width direction and a second battery for drive provided above a part of the floor between the right-and-left rear seats and extending in a vehicle longitudinal direction, wherein the first and second batteries are arranged in a T-letter shape in a plan view, right-and-left both end portions of the first battery are fixed to the baggage-compartment part of the floor, a front end portion of the second battery extending forward beyond the kick-up portion toward an inside of the front-seat center console is fixed to the floor, and each back face portion of the respective seatbacks of the right-and-rear rear seats which are positioned in a forward-folded state and an upper face portion of the first battery are configured to form a substantially flat and enlarged floor surface of a baggage compartment.

According to the present invention, the sufficient battery volume, the height of the baggage space, and the head clearance of the passenger seated in the rear seat can be ensured, and also the substantially-flat floor surface of the baggage compartment can be properly enlarged in the forward-folded state of the seatbacks of the right-and-left rear seats.

In an embodiment of the present invention, the cabin structure of the vehicle may further comprise a middle seatback portion provided between the right-and-left rear seats so as to be forward folded onto an upper face of the rear-seat center console, wherein longitudinal thickness of the middle seatback portion in an upright position may be configured to be smaller than that of each of the seatbacks of the right-and-left rear seats in the upright position such that a back face portion of the middle seatback portion positioned in a forward-folded state and each back face portion of the respective seatbacks of the right-and-left rear seats positioned in the forward-folded state form a flat surface extending in the vehicle width direction.

According to this embodiment, since the back face portion of the middle seatback portion positioned in the forward-folded state and each back face portion of the respective seatbacks of the right-and-left rear seats positioned in the forward-folded state form the flat surface extending in the vehicle width direction, flatness of the floor surface of the baggage compartment can be improved.

In another embodiment of the present invention, an upper portion of the rear-seat center console may be provided with a seatback placement portion where the forward-folded middle seatback portion is received and a protrusion portion which is configured to protrude in front of the seatback placement portion, a function panel to provide an input/output function to a passenger seated in the rear seat may be arranged at a portion of the protrusion portion which faces the passenger seated in the rear seat, and the function panel may be covered with the middle seatback portion positioned in the forward-folded state.

According to this embodiment, the function panel of the rear-seat center console can be properly protected by a front portion of the forward-folded middle seatback portion against a loaded baggage.

In another embodiment of the present invention, a rear portion of the front-seat center console and the front end portion of the second battery may be fixed to a central portion, in the vehicle width direction, of the floor by a common attaching member.

According to this embodiment, attachment portions of the console's rear portion and the battery's front portion can be compact, so that erosion of respective volumes of the both by the attachment portions can be suppressed.

In another embodiment of the present invention, the front-seat center console may comprise storage portion or an object storage portion which opens upward and an air-conditioning discharge port for the rear seat which is arranged behind the object storage portion, the front end portion of the second battery may be positioned close to a rear end portion of the object storage portion, and the air-conditioning discharge port may be positioned above the front end portion of the second battery.

According to this embodiment, the air-conditioning discharge port for the rear seat can be located at an appropriate level for the rear seat's passenger, and also the second battery can be extended to the rear end portion of the object storage portion without being hindered by the air-conditioning discharge port, thereby increasing the battery volume properly.

In another embodiment of the present invention, a duct to introduce conditioning air from an air-conditioning unit provided at a front part of the cabin to the air-conditioning discharge port for the rear seat may be arranged inside the front-seat center console, the object storage portion may be formed in a cylindrical shape with a bottom, which includes a bottom face portion and right-and-left side wall portions, and the duct may be configured to extend from below the object storage portion to the air-conditioning discharge port for the rear seat, passing through a space between a side face portion of the front-seat center console and the side wall portion of the object storage portion.

According to this embodiment, since the battery for the drive can be made close to the rear end portion of the object storage portion without being hindered by the duct, thereby increasing the battery volume properly.

In another embodiment of the present invention, the cabin structure of the vehicle may further comprise an aluminum-made battery case in which a case rear portion to store the first battery and a case front portion to store the second battery are integrally formed substantially in the T-letter shape in the plan view, wherein the case rear portion may be fixed to a pair of right-and-left high-rigidity vehicle-body portions which are located in back of the right-and-left rear seats, and the case front portion may be fixed to another pair of right-and-left high-rigidity vehicle-body portions which are located in front of the seatbacks of the right-and-left rear seats.

According to this embodiment, since the battery case can be made to function as a frame member to reinforce the vehicle body, so that the bending and/or torsional rigidity of the vehicle body can be improved.

In another embodiment of the present invention, both end portions, in the vehicle width direction, of the case rear portion of the battery case may be fixed to right-and-left rear side frames of the vehicle.

According to this embodiment, since the case rear portion of the battery case is fixed to the rear side frame as an existing high-rigidity member, no additional high-rigidity portion extending in the vehicle with direction is necessary in the baggage compartment. Further, since the right-and-left rear side frames where a load is easily inputted from a rear wheel are interconnected, in the vehicle width direction, by the case rear portion of the battery case, torsional deformation of vehicle body which is caused by the input load from the rear wheel can be suppressed.

In another embodiment of the present invention, the cabin structure of the vehicle may further comprise right-and-left damper support portions to support respective upper ends of right-and-left rear-suspension dampers, wherein the both end portions, in the vehicle width direction, of the case rear portion of the battery case may be fixed to the right-and-left damper support portions.

According to this embodiment, since the damper support portions where the input load from the rear wheel is directly applied is interconnected, in the vehicle width direction, by the case rear portion of the battery case, the torsional deformation of vehicle body caused by the input load from the rear wheel can be suppressed.

In another embodiment of the present invention, the floor may be provided with a floor tunnel protruding upward and extending in the vehicle longitudinal direction substantially at a center, in the vehicle width direction, of the floor, and a front end portion of the case front portion of the battery case may be fixed to a high-rigidity portion of the floor.

According to this embodiment, since the front-and-rear end portions of the battery case are fixed to the high-rigidity members of the vehicle body which are separated from each other in the vehicle longitudinal direction., the bending rigidity of the vehicle in a side view can be improved.

The present invention will become apparent from the following description which refers to the accompanying drawings.

### BRIEF DESCRIPTION OF THE DRAWINGS

FIG. 1 is a perspective sectional view of a main part of a vehicle of the present embodiment, when viewed from a front, left and upper side of the vehicle.
FIG. 2 is a perspective sectional view of the main part of the vehicle shown in FIG. 1 in which illustration of a front seat is omitted, and a front-seat center console portion and a rear-seat center console portion are shown by an imaginary line.
FIG. **3** is a perspective sectional view of the main part of the vehicle shown in FIG. **1** in a state where a rear-seat armrest is forward folded.
FIG. **4** is a perspective sectional view of the main part of the vehicle shown in FIG. **1** in a state where seatbacks of rear seats and a middle seatback portion are all forward folded.
FIG. **5** is a perspective view of the main part of the vehicle of the present embodiment, when viewed from a rear, left and upper side of the vehicle.
FIG. **6** is a sectional view taken along line A-A of FIG. **1****.**
FIG. **7** is an enlarged view of the main part shown in FIG. **6****.**
FIG. **8** is an enlarged view of the main part shown in FIG. **7** in a state where the seatbacks of the rear seats and the middle seatback portion are all forward folded.
FIG. **9** is a perspective view explaining an arrangement structure of a supply duct for the rear seat.
FIG. **10** is a sectional view taken along line B-B of FIG. **6****.**
FIG. **11** is a perspective sectional view of an attaching member to attach and support an object storage portion and its surroundings, when viewed from a rear side of the vehicle.
FIG. **12** is a perspective sectional view of an attaching member to attach and support a second battery case and its surroundings, when viewed from a front side of the vehicle.
FIG. **13** is a sectional view taken along line C-C of FIG. **11****.**
FIG. **14** is an exterior perspective view showing an exterior of a cabin of an electromotive vehicle, when viewed from the rear side of the vehicle, according to another embodiment.
FIG. **15** is a plan view showing the exterior of the cabin of the electromotive vehicle.
FIG. **16** is a sectional view taken along line A-A of FIG. **15****.**
FIG. **17** is a sectional view taken along line B-B of FIG. **15****.**
FIG. **18** is a sectional view taken along line C-C of FIG. **15****.**
FIG. **19** is a sectional view taken along line D-D of FIG. **15****.**

### DETAILED DESCRIPTION OF THE INVENTION

Hereafter, an embodiment of the present invention will be described specifically referring to the drawings. In the drawings, an arrow F shows a front (forward) side of a vehicle **V,** and an arow U shows an upper (upward) side of the vehicle **V,** an arrow Ri shows a right (rightward) side of the vehicle **V,** and an arrow Le shows a left (leftward) side of the vehicle **V.** Basically, in the flowing description, "front (forward)," "rear (rearward)," "right (rightward)," "left (leftward)," "upper (upward)," and "lower (downward)" show respective directions relative to a position of the vehicle **V** except for particularly-referred cases.

The vehicle **V** of the present embodiment may be, for example, a hybrid electric vehicle (HEV), or a plug-in hybrid electric vehicle (PHEV), which is capable of charging a battery from a home (household) power source, among various types of hybrid vehicle which can produce a driving power by combining an internal combustion engine and an electric motor.

### (Basic Structure)

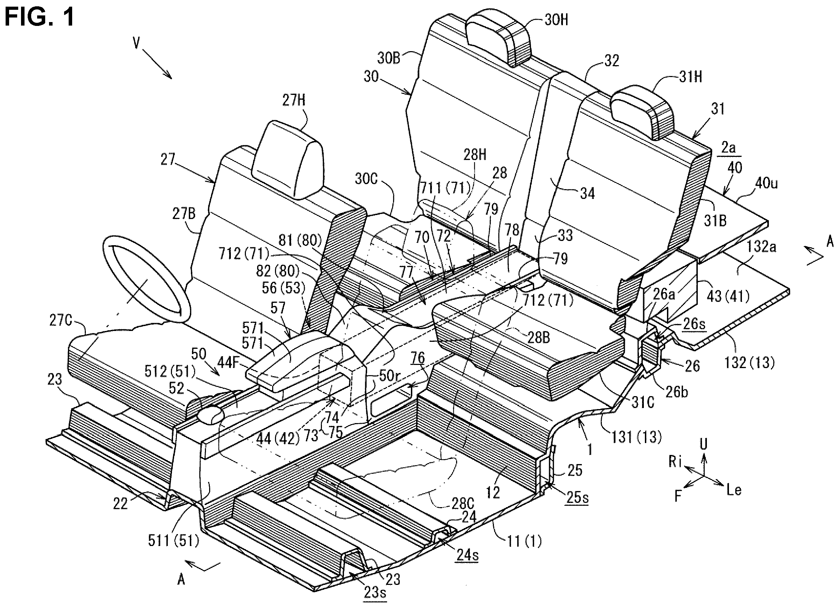

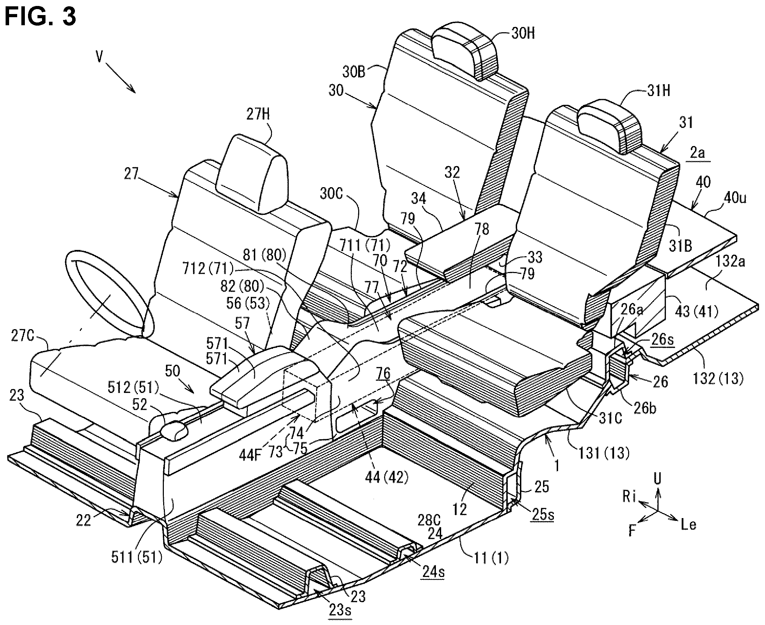

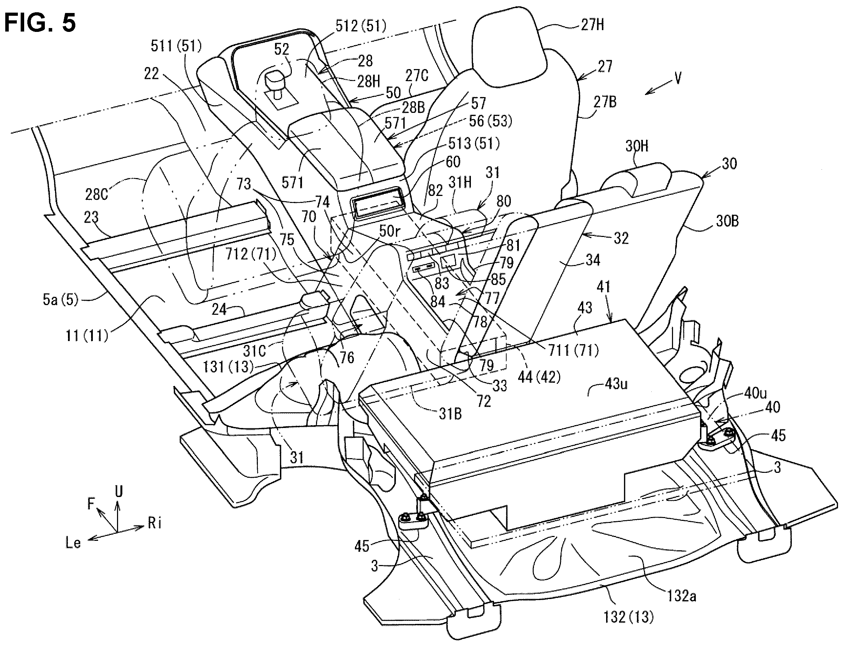

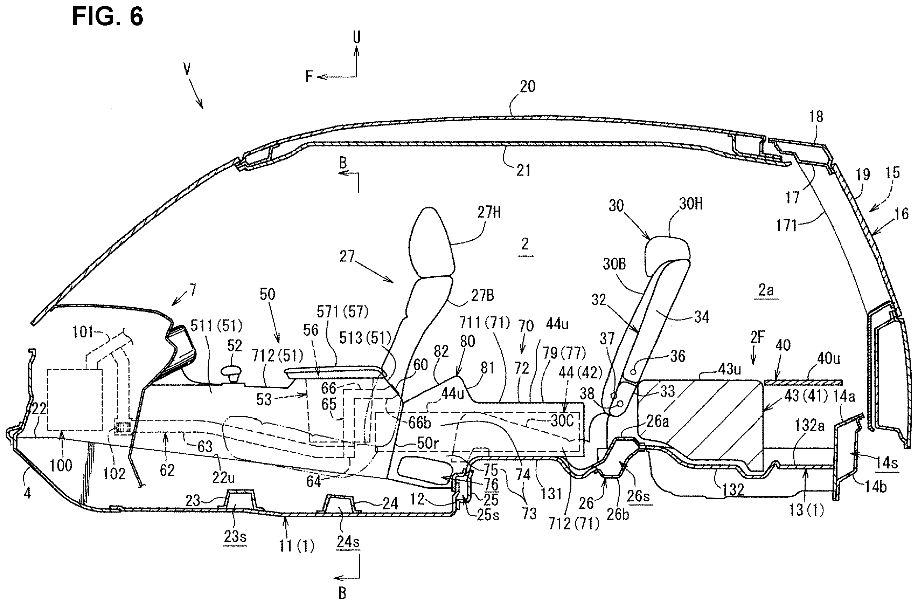

As shown in FIGS. **1** - **6****,** especially FIGS. **5** and **6****,** the vehicle **V** of the present embodiment comprises a floor panel (particularly a steel-made floor panel) **1** which mainly forms a floor surface (bottom face) of a cabin **2,** a pair of right-and-left front seats **27, 28,** and a pair of right-and-left rear seats **30, 31.**

The floor panel **1** may be integrally formed by a front floor panel **11** which supports the pair of front seats **27, 28,** a kick-up portion **12** which rises upward from a rear end of the front floor panel **11** and is of a vertical-wall shape, and a rear floor panel **13** which extends rearward from the kick-up portion **12.**

The rear floor panel **13** may be integrally formed by a rear-seat cushion panel **131** (rear-seat pan) which supports respective seat cushions 30C, 31C of the rear seats **30, 31** and a baggage-compartment floor panel **132** which extends rearward from the rear-seat cushion panel **131** and forms a floor surface of a baggage compartment **2a.**

Herein, the baggage-compartment floor panel **132** may be provided with a recess portion **132a** to store a spare tire at a rear-side portion of a central part, in a vehicle width direction, thereof, and a rear end panel **14a** (see FIG. **6**) extending in the vehicle width direction is attached to a rear-end open side of the recess portion **132a.** Further, a floor surface of another part of the floor panel **1** than the baggage compartment **2a** in the cabin **2** (i.e., the floor surface of the part of the floor panel **1** where a passenger stays, which is located in front of the baggage compartment **2a**) may be formed by the front floor panel **11,** the kick-up portion **12** and the rear-seat cushion panel **131.**

As shown in FIG. **6****,** a rear end member **14b** extending in the vehicle width direction may be fixedly connected to a rear face of the rear end panel 14a, and a rear-end closed-cross section **14s** extending in the vehicle width direction is formed between the rear end member 14b and the rear end panel **14a,** thereby ensuring the rear vehicle-body rigidity.

Further, as shown in FIG. **6****,** the vehicle **V** of the present embodiment may be a hatchback type, in which a rear-gate opening **15** which is configured to open rearward is provided at the vehicle rear part, and a rear gate **16** is provided so as to open and close this rear-gate opening **15.**

The rear gate **16** may comprise a rear-gate inner panel **17,** a rear-gate outer panel **18,** and a rear window **19,** and the rear-gate inner panel **17** may be covered with a rear-gate trim **171** which is an interior member from the side of the cabin **2.**

Further, the vehicle **V** may comprise a steel-made roof panel **20** as a vehicle roof, and the roof panel **20** may be covered with a roof trim **21** which is another interior member from the side of the cabin **2.** The height size of the cabin **2** including the baggage compartment **2a,** except for the front part, may be determined by the roof trim **21,** the rear-gate trim **171,** the rear window **19,** and others.

As shown in FIGS. **1****,** **5** and **6****,** the front floor panel **11** may be provided with a tunnel portion **22** which extends in a longitudinal direction between a dash lower panel **4** (dash panel) (see FIG. **6**) and the vertical-wall shaped kick-up portion **12** and protrudes toward an inside of the cabin **2.**

The tunnel portion **22,** which provides the vehicle-body rigidity mainly, may be joined to the kick-up portion **12** at its rear end portion. Herein, the kick-up portion **12** may be formed in a vertical-wall shape which is higher than the rear end portion of the tunnel portion **22.**

A plurality of cross members **23, 24** (vehicle-body rigidity member) which are spaced apart from each other in the longitudinal direction may be joined to the tunnel portion **22** of the front floor panel **11** from above on the both sides of the tunnel portion **22.** The cross members **23, 24** extend in the vehicle width direction and interconnect right-and-left vertical wall portions of the tunnel portion **2** and right-and-left side sills **5** (specifically side sill inners **5a**) (the left-side one is only illustrated in FIG. **5**) as a vehicle-body rigidity member, and, as shown in FIGS. **1** and **6****,** form closed-cross sections **23s, 24s** extending in the vehicle width direction between the floor panel **11** and those.

As shown in FIGS. **1** and **6****,** plural rear cross members **25, 26** (vehicle-body rigidity members) spaced apart from each other in the longitudinal direction may be joined to the rear floor panel **13.** The front-end rear cross member **25** (No. 3 cross member) is joined to a front end portion of the rear floor panel **13** (i.e., a front end portion of the rear-seat cushion panel **13**) from below and joined to the kick-up portion **12** from behind, and forms a closed-cross section **25s** extending in the vehicle width direction between that and a corner portion of the rear floor panel **13** and the kick-up portion **12.**

The middle rear cross member **26** (No. 4 cross member) may comprise a middle rear cross member upper **26a** which faces the rear floor panel **13** on upper-and-lower both sides and has a hat-shaped cross section opening downward and a middle rear cross member lower **26b** which faces the rear floor panel **13** on the upper-and-lower both sides and has a hat-shaped cross section opening upward.

The middle rear cross member upper **26a** and the middle rear cross member lower **26b** may be joined together such that a rear end of the rear-seat cushion panel **131** is interposed therebetween at their rear-end flange portions, and may also be joined together such that a front end of the baggage-compartment floor panel **132** is interposed therebetween, thereby forming a closed-cross section **26s** extending in the vehicle width direction therebetween.

The driver's seat **27** (the right-side front seat **27** in the present embodiment) among the above-described pair of right-and-left front seats **27, 28** may comprise a seat cushion **27C** which forms a sitting face for a passenger (driver), a seatback **27B** which extends upward from a rear end portion of the seat cushion **27C** and forms a face to receive a passenger's back portion, and a headrest **27H** which is provided at an upper part of the seatback **27B** to support a passenger's head portion.

Likewise, as shown in FIGS. **1** and **5****,** the assistant seat **28** (the left-side front seat **28**in the present embodiment) among the pair of right-and-left front seats **27, 28** may comprise a seat cushion **28C** which forms a sitting face for a passenger (assistant), a seatback **28B** which extends upward from a rear end portion of the seat cushion **28C** and forms a face to receive a passenger's back portion, and a headrest **28H** which is provided at an upper part of the seatback **28B** to support a passenger's head portion.

Further, as shown in FIGS. **1** - **6****,** a front-seat center console portion **50** is arranged between the driver's seat **27** and the assistant seat **28,** i.e., at a middle part, in the vehicle width direction, of a vehicle body, such that it is interposed between the seat cushions **27C, 28C** of the right-and-left front seats **27, 28.** The front-seat center console portion **50** will be described specifically later.

As shown in FIG. **1** and **5****,** the pair of rear seats **30, 31** are arranged behind the pair of front seats **27, 28,** and provided above the rear-seat cushion panel **131.** The rear seats **30, 31** may comprise seat cushions **30C, 31C** which form a siting face for each passenger, seatbacks **30B, 31B** which extend upward from each rear end portion of the seat cushions **30C, 31C** and form a face to receive each passenger's back portion, and headrests **30H, 31H** which are provided at each upper part of the seatbacks **30B, 31B** to support each passenger's head portion.

Moreover, a rear-seat center console portion **70** is arranged between the right-and-left rear seat **30, 31,** i.e., at a middle part, in the vehicle width direction, of the vehicle body, such that it is interposed between the seat cushions **30C, 31C** of the right-and-left rear seats **30, 31.** A middle seatback portion **32** is provided between the seatbacks **30B, 31B** of the rear seats **30, 31,** i.e., at the central part, in the vehicle width direction, of the vehicle body.

The right-and-left rear seats **30, 31** are made to be separated from each other in the vehicle width direction by the rear-seat center console portion **70** and the middle seatback portion **32,** so that these rear seats **30, 31** are independent from each other. The rear-seat center console portion **70** will be described specifically later.

The middle seatback portion **32** may comprise a body portion **33** and a rear-seat armrest **34.** The rear-seat armrest **34** may be configured to be rotatable relative to the body portion **33** around a support point **36** (armrest support point) shown in FIG. 6 which is provided at a lower part of the armrest **34,** that is - the rear-seat armrest **34** is foldable so as to take its forward-folded position and its upright-standing position.

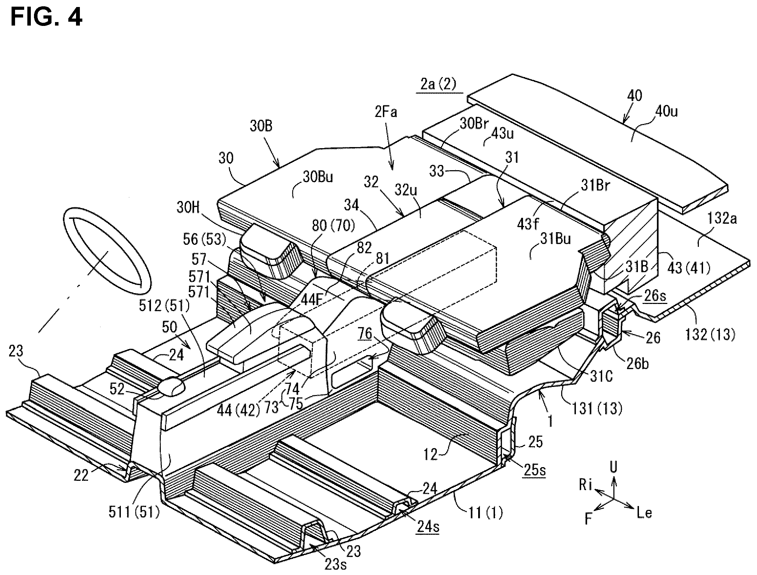

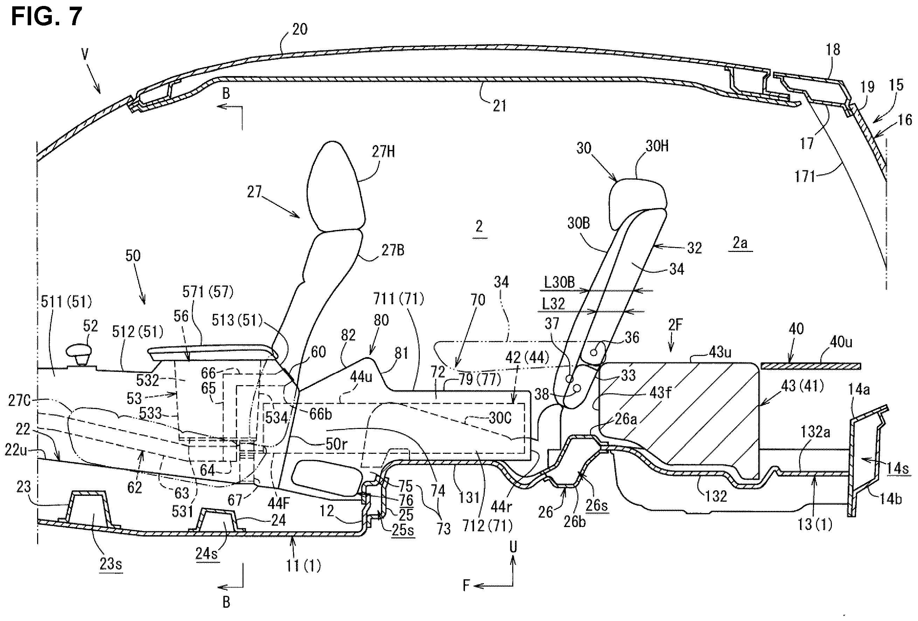

Thus, as shown in FIG. **1****,** the rear-seat armrest **34** taking the upright-standing position forms a front face of an upper part of the middle seatback portion **32.** Meanwhile, as shown in FIGS. **4** and **7****,** the rear-seat armrest **34** constitutes a horizontal armrest when the armrest **34** is forward folded.

Herein, as shown in FIG. **4****,** the seatbacks 30B, 31B of the right-and-left rear seats **30, 31** are configured to be forward folded by rotating around each support point **37** (seatback rotational support point) (see FIG. **6**) which is provided at each lower part thereof.

Likewise, the middle seatback portion **32** may be configured to be forward folded by rotating around another support point **38** (seatback rotational support point) (see FIG. 6) which is positioned below the above-described support point **36** (armrest rotational support point) as shown in FIG. **4****.**

Herein, the lower part of the middle seatback portion **32** may be pivotally supported via the above-described support point **38** relative to an bracket (not illustrated) which rises upward from the rear-seat cushion panel **131.** However, the middle seatback portion **32** may be pivotally supported directly via the support point **38** or indirectly by using a bracket or the like relative to the rear seats **30, 31** or a case of a second battery for drive.

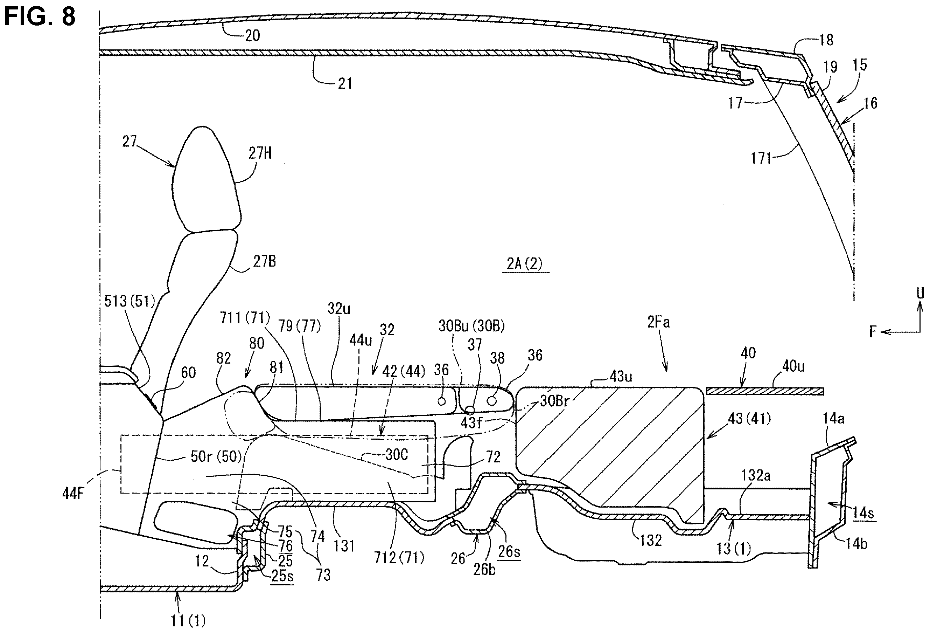

Herein, as shown in FIG. **7****,** the longitudinal thickness (L32) of the middle seatback portion **32** in the upright position may be configured to be smaller than that (L30b) of each of the seatbacks **30B, 31B** of the right-and-left rear seats **30, 31** in the upright position. The longitudinal thickness of the seatback **31B** of the left-side rear seat **31** may be set to be equal to that of the seatback **30B** of the right-side rear seat **31.** Thereby, as shown in FIGS. **4** and **8****,** according to the vehicle **V** of the present embodiment, when the seatbacks **30B, 31B** are forward folded onto the seat cushions **30C, 31C,** respectively, and also the middle seatback portion **32** is folded onto the rear-seat center console portion **70,** respective back face portions **30Bu, 31Bu** of the forward-folded seatbacks **30B, 31B** and a back face portion **32u** of the forward-folded middle seatback portion **32** form a substantially flat surface.

### (Basic Structure of First and Second Batteries for Drive 41, 42)

As shown in FIGS. **1****,** **2** and **7****,** since the vehicle **V** of the present embodiment is the hybrid electric vehicle (HEV) or the plug-in hybrid electric vehicle (PHEV), the batteries for drive **41, 42** are installed. The first battery for drive **41** and the second battery for drive **42** are installed such that they are arranged above the floor panel 1, respectively.

Each of the first and second batteries **41, 42** may comprise a single or plural battery packs (not illustrated) as a first battery body and a second battery body. The battery packs of the present embodiment are stored in battery cases **43, 44,** respectively, and they are configured such that plural battery cells are arranged in line and connected to each other inside the battery cases **43, 44.**

The battery constituting the battery pack may be a lead storage battery, lithium-ion battery, or nickel-hydrogen battery, or a different type of secondary battery. Further, a fuel cell battery may be applicable as well. Each of the battery cases **43, 44** of the first and second batteries **41, 42** is made of an aluminum dicast, for example, so as to ensure the specified rigidity, and each of their upper face portions **43u, 44u** is formed in a flat-face shape as shown in FIG. **5****.**

### (First Battery 41)

As shown in FIGS. **1****,** **5** and **7****,** the first battery **41** is arranged in a lower space of the baggage compartment **2a** behind the right-and-left rear seats **30, 31.** The battery case **43** of the first battery **41** (hereafter, referred to as the "first battery case **43**") extends straight in the vehicle width direction, and is arranged over an almost whole length, in the vehicle width direction, of a front part of the baggage-compartment floor panel **132** which forms the floor surface of the baggage compartment **2a.** The first battery case **43** is stored at a front part of the baggage-compartment floor panel **132** which is located in front of the recess portion **132a** storing the spare tire.

As shown in FIG. **5****,** the first battery case **43** may be attached to the above-described middle rear cross member **26** and a pair of rear side frames **3** which are provided at both sides of the baggage-compartment floor panel **132** as a vehicle-body rigidity member via brackets **45** or the like by a fastening member of bolts and nuts.

The first battery case **43** may be, as shown in FIGS. **4** and **8****,** arranged behind the rear seats **30, 31** such that its front end portion **43f** is close to respective rear end portions **30Br, 31Br** of the forward-folded seatbacks **30B, 31B** of the rear seats **30, 31** with substantially no gap formed, in the longitudinal direction, between the front end portion **43f** and the rear end portions **30Br, 31Br.**

Further, as shown in FIG. **4****,** the first battery case **43** may be arranged such that its upper face portion **43u** and the respective back face portions **30Bu, 31Bu, 32u** of the seatbacks **30B, 31B** of the right-and-rear rear seats **30, 31** and the middle seatback portion **32,** which are all forward folded, form a substantially flat surface.

Particularly, as shown in FIGS. **4** and **6****,** above the baggage-compartment floor panel **132** and behind a rear end portion of the first battery case **43** is provided a baggage-compartment partition board **40** to vertically partition a rear part of the baggage compartment **2a,** which is configured to extend horizontally and detachable. An arrangement height of this board **40** may be set such that its upper face portion **40u** is located substantially at the same level as the upper face portion **43u** of the first battery case **43.**

Accordingly, in a state where the baggage-competent partition board **40** may be set at its arrangement position, the respective upper face portions **43u, 40u** of the first battery case **43** and the baggage-compartment partition board **40** form a substantial baggage-compartment floor surface **2F** which is different from the baggage-compartment floor surface formed by the upper face portion of the baggage-compartment panel **132** (see FIGS. **6** and **7**).

Moreover, as shown in FIGS. **4** and **8****,** when the seatbacks **30B, 31B** of the rear seats 30, 31 and the middle seatback portion **32** are forward folded, the respective back face portions **30Bu, 31Bu, 32u** of these members **30B, 31B, 32** and the respective upper face portions **43u, 40u** of the first battery case **43** and the baggage-compartment partition board **40** form a substantially flat and/or large surface.

That is, the baggage-compartment floor surface **2F** formed by the respective upper face portions **43u, 40u** is enlarged to an area around the rear seats **30, 31** by the respective **30Bu, 31Bu, 32u,** thereby producing a flat and/or enlarged baggage-compartment floor surface **2Fa** which is capable of loading a large volume of baggage.

Herein, either one of the seatbacks **30B, 31B, 32** may be configured not to be forward folded because these seatbacks **30b, 31b, 32** can be forward folded independently, which is not illustrated. Thereby, allowing the passenger to be seated in the non-folded seatback **30B** or **31B** and enlarging a space of the baggage compartment **2a** can be compatible. Further, the baggage-compartment partition board **40** is not necessary, so the vehicle may not be provided with this board. Meanwhile, the board **40** may be configured such that it extends forward so as to be placed from above onto the upper face portion **43u** of the first battery case **43** and its forward extension portion forms a substantial upper face portion **(43u)** of the first battery case **43.**

### (Second Battery 42)

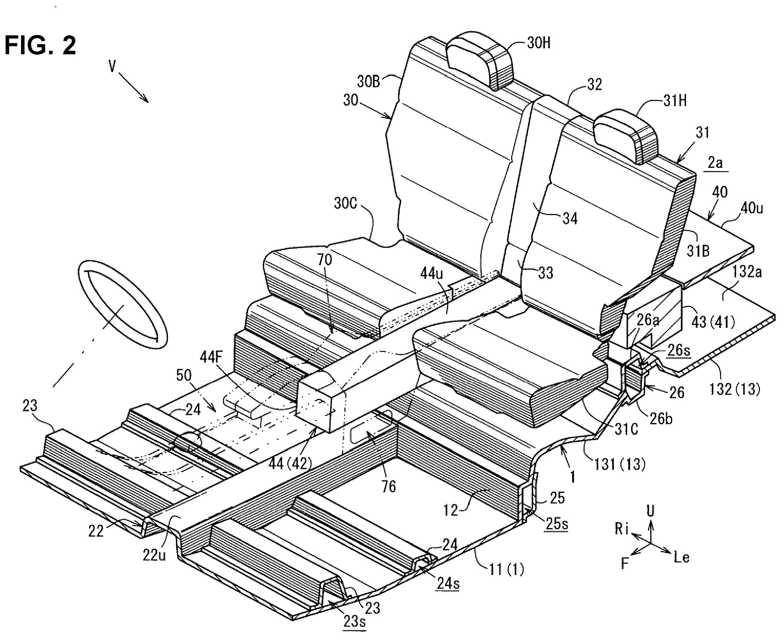

As shown in FIGS. **2****,** **5** and **7****,** the second battery for drive **42** is arranged between the seat cushions **30C, 31C** of the right-and-left rear seats **30, 31** in the vehicle width direction. Specifically, while it is arranged above the rear-seat cushion panel **131,** the second battery **42** is not positioned below the seat cushions **30C, 31C** of the rear seats **30, 31,** for example, and it is just longitudinally arranged in a straight shape between the seat cushions **30C, 31C** of the rear seats **30, 31** in the vehicle width direction of the rear-seat cushion panel **131.**

The battery case **44** of the second battery **42** (hereafter, referred to as the "second battery case **44**") is fixedly attached to the upper face portion of the rear-seat cushion panel **131** by a fastening member of bolts and nuts, not illustrated. As shown in FIG. 7, the second battery case **44** extends forward and straight such that its rear end portion **44r** is arranged close to the front end portion **43f** of a central portion, in the vehicle width direction, of the first battery case **43.**

Thereby, the first and second battery cases **43, 44** are configured substantially in a T-letter shape in a plan view as a whole. Further, as shown in FIGS. **2****,** **5** and **7****,** the second battery case **44** is arranged such that its front portion horizontally extends forward from the kick-up portion **12** along the tunnel portion **22** and is separated upward from the upper face portion **22u** of the tunnel portion **22** (see FIG. **2****).** Herein, in the present embodiment, the battery pack inside the second battery case **44** may be composed of one or more batteries, particularly many batteries which are arranged in line along the longitudinal direction, corresponding to the second battery case **44** extending in the longitudinal direction, which is not illustrated. Thus, the sufficient battery volume of the second battery **42** is ensured by forward extending the second battery case **44** beyond the kick-up portion **12.**

As shown in FIGS. **1****,** **2****,** **5****,** **7** and **8****,** especially in FIG. **8****,** the front end portion **44F** of the second battery case **44** may extend forward beyond a rear end portion **50r** of the front-seat center console portion **50** so that it can be engaged into the front-seat center console portion **50** from behind. This front end portion **44F** may be supported by the tunnel portion **22** via an attaching member **67** described later (FIG. **7****)** inside the front-seat center console portion **50.** Thereby, a front portion of the second battery case **44** (i.e., the extension portion beyond the kick-up portion **12)** is provided to extend horizontally between the attaching member **67** and the rear-seat cushion panel **131.**

### (Front-Seat Center Console Portion 50)

As shown in FIGS. **1** and **5****,** the front-seat center console portion **50** may be connected to a front end of a lower part of a central portion, in the vehicle width direction, of an instrument panel **7** (see FIG. **6****)** which extends in the vehicle width direction at a front side of the cabin **2** at around its front end.

As shown in FIGS. **1****,** **5****,** **6** and **7****,** the front-seat center console portion **50** may comprise a cover member **51** as a hollow-box shaped interior member, a shift lever **52,** an object storage portion **53,** a lid **57,** the attaching member **67** (see FIG. **7****)** to support the object storage portion **53,** and a rear-seat supply duct **62** (see FIGS. **6** and **7****).**

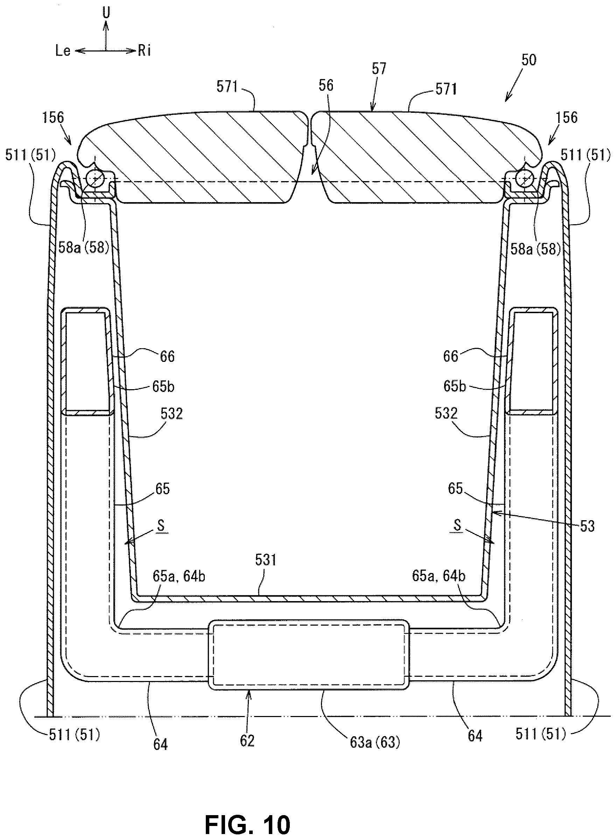

As shown in FIGS. **1** and **5****,** the cover member **51** may comprise a pair of right-and-left side face portions **511** (see FIG. 10) which form a side face of the center console portion **50,** a top face portion **512** which forms a front portion of an upper face portion of the center console portion **50,** and a rear face portion **513** (see FIG. **5****)** which is arranged at an upper portion of the rear end portion **50r** of the center console portion **50,** which are all decorative panels.

The shift lever **52** is a lever for shifting a transmission (not illustrated) of the vehicle V according to a passenger's operation. This shift lever **52** is arranged at a position which is located at a front side and a central side, in the vehicle width direction, of the top face portion **512.**

As shown in FIG. **7****,** the object storage portion **53** may be provided at a rear part of the front-seat center console portion **50.** This object storage portion **53** may comprise a bottom wall **531,** a pair of right-and-left side walls **532** which rise from both-side edges of the bottom wall 531 (see FIG. **10****),** a front wall **533** which rises from a front edge of the bottom wall **531,** and a rear wall **534** which rises from a rear edge of the bottom wall **531,** and also has an opening portion **56** which opens upward, so that the object storage portion **53** is of a cylindrical shape with floor. The above-described opening portion **56** may be provided behind the top face portion **512** of the front-seat center console portion **50.** Herein, the object storage portion **53** of the present embodiment is deep enough to store a tablet terminal positioned in a vertical state.

The lid **57** may be provided above the object storage portion **53** so as to be configured to open and/or close the opening portion **56.** The lid **57** may comprise a pair of right-and-left split lids **571, 571** which can open and close the opening portion **56** of the object storage portion **53.** As shown in FIG. 10, a pair of pivot portions **58, 58** may be provided at right-and-left side portions **156, 156** of an upper face of the rear part of the front-seat center console portion **50.** These pivot portions **58, 58** pivotally support the right-and-left split lids **571, 571** relative to the side portions **156** via pivotal axes **58a** extending in the longitudinal direction. Thus, the right-and-left split lids 571, **571** form a double-hinged door type in which the opening portion **56** is opened at the center.

The lid **57** positioned in closed state of the opening portion **56** may have the sufficient strength and cushion performance so that it can serve as an armrest for the passenger. Further, an upper face portion of the lid **57** of the object storage portion **53** may be located at a higher level than the top face portion **512,** and may have largeness and height which can make a front arm of the front-seat passenger (seated in the front seats **27, 28)** be properly placed on that.

Herein, the front-seat center console portion **50** of the present embodiment may have not only the shift lever **52** but some other operational portions to conduct various setting of the vehicle **V,** such as a navigation system, and some support brackets to support shift operational mechanisms of the shift lever **52** and others, which are not illustrated here.

As shown in FIG. **5****,** the front-seat center console portion **50** may be a console with a rear vent for air-conditioning of the rear-seat passenger, and an air-conditioning discharge port **60** for the rear-seat passenger (seated in the rear seats **30, 31**) may be formed at the rear face portion **513** of the above-described cover member **51.**

As shown in FIG. **7****,** the rear face portion **513** may be arranged behind the object storage portion **53** and substantially at the same level as the top face portion **512,** and the air-conditioning discharge port **60** formed at the central portion, in an elevational view, of the rear face portion **513** may be configured to be inclined obliquely downward-and-rearward so as to face a head-chest portion of the rear-seat passenger. Herein, this discharge port **60** is provided with a louver which closes or opens the discharge port **60** and changes an air-supply direction.

Particularly, as shown in FIG. **6****,** inside the instrument panel **7** disposed at the front side of the cabin **2** are provided an air-conditioning unit **100** (air-conditioner) and a front-seat supply duct **101** to supply conditioning air (cool/warm air) from the air-conditioning unit **100** to a front-seat discharge port (not illustrated) which is provided at a dashboard.

The rear-seat supply duct **62** may be connected to an upstream side of the front-seat supply duct **101,** and a part of the conditioning air flowing from the air-conditioning unit **100** to the front-seat discharge port (not illustrated) through the front-seat supply duct **101** is divided into the rear-seat supply duct **62.**

The rear-seat supply duct **62** may be provided to penetrate (extend) the inside of the front-seat center console portion **50** in the longitudinal direction, and its rear end portion **(66b)** may be connected to the rear-seat discharge port **60** provided at the rear face portion **513** of the front-seat center console portion **50.** A rear blower **102** may be arranged at a portion near a connection portion of the rear-seat supply duct **62** to the front-seat supply duct **101,** i.e., at its upstream-side portion.

When the air-conditioning unit **100** is operated, part of the conditioning air is discharged from the front-seat discharge port (not illustrated), and the rest of the conditioning air is supplied toward the rear-seat supply duct **62,** which is then supplied with pressure toward the rear-seat discharge port **60** through the rear-seat supply duct **62** by the rear blower **102.**

Next, an arrangement route of the rear-seat supply duct **62** will be described specifically. As shown in FIGS. **6****,** **7** and **9****,** the rear-seat supply duct **62** may include a rearward arrangement portion **63,** a pair of right-and-left outward arrangement portions **64,** a pair of right-and-left upward arrangement portions **65,** and a pair of right-and-left upper-rearward arrangement portions **66,** which are located along a conditioning-air flowing direction from its upstream side toward its downstream side.

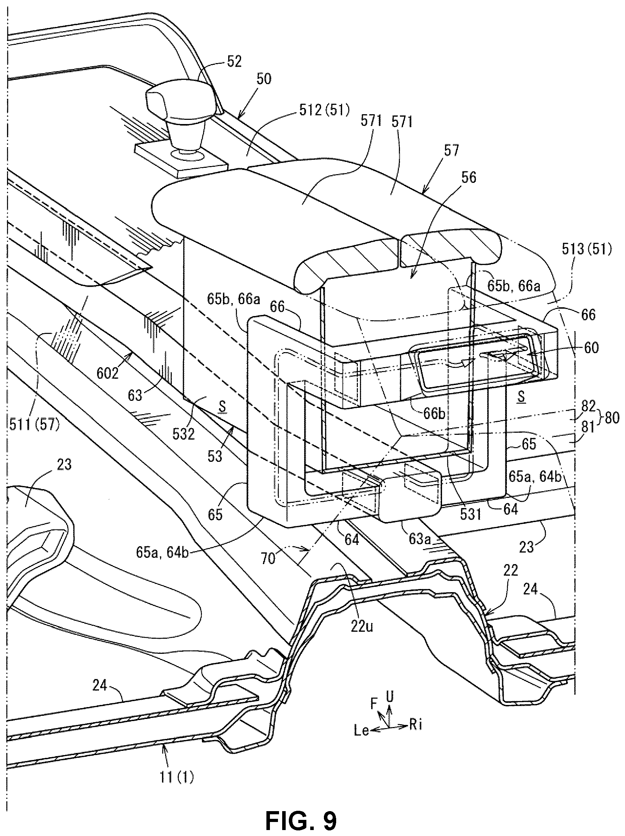

The rearward arrangement portion **63** may be arranged rearward from its connection portion to the front-seat supply duct **101** along the upper face portion **22u** of the tunnel portion **22.** As shown in FIGS. **7** and **9****,** a rear part of the rearward arrangement portion **63** may be arranged rearward from a front side of the front wall **533** of the object storage portion **53** such that it goes into a space which is positioned just below the bottom wall **531** of the object storage portion 53, i.e., between the bottom wall 531 and the upper face portion 22u of the tunnel portion 22.

As shown in FIGS. 7 and 9, this rear part of the rearward arrangement portion 63 may be arranged substantially horizontally up to a position which is located at the central portion, in the vehicle width direction, of the object storage portion 53 and also located just before the rear wall 534 of the object storage portion 53 in the longitudinal direction (see FIG. 7). That is, a rear end portion 63a of the rearward arrangement portion 63 is located just below the bottom wall 531 of the object storage portion 53.

As shown in FIGS. 9 and 10, the pair of right-and-left outward arrangement portions 64 may extend substantially horizontally from the rear end portion 63a of the rearward arrangement portion **63** toward right-and-left both sides in the vehicle width direction, so that each inside of the right-and-left outward arrangement portions **64** is continuous to an inside of the rearward arrangement portion **63** via the rear end portion **63a.** Thus, the rear-seat supply duct **62** is divided into the right-and-left sides at the position just below the bottom wall **531** of the object storage portion **53.**

That is, the pair of right-and-left outward arrangement portions **64** are arranged toward the outward sides in the vehicle width direction, i.e., the opposite sides to each other, from the rear end portion **63a** of the rearward arrangement portion **63.** Each outward end portion **64b** of the right-and-left outward arrangement portions **64** is positioned in a space **S** between the side face portion **511** of the front-seat center console portion **50** and the side wall **532** of the object storage portion **53.**

Each of the upward arrangement portions **65** may be arranged vertically upward along the side wall **532** of the object storage portion **53** in the space **S** between the side face portion **511** of the front-seat center console portion **50** and the side wall **532** of the object storage portion **53.** Further, the upward arrangement portion **65** may be connected to the outward end portion **64b,** in the vehicle width direction, of the outward arrangement portions **64** at its lower end portion **65a,** and, as shown in FIGS. **7** and **9****,** it may be arranged to extend up to an upper level corresponding to the rear-seat discharge port **60.**

Herein, as shown in FIG. **10****,** the space **S** between the side face portion **511** of the front-seat center console portion **50** and the side wall **532** of the object storage portion **53** may exist as a dead space at a position which is just below the side portion **156** of the opening portion **56** of the object storage portion **53** at the rear part of the front-seat center console portion **50.** In the present embodiment, as described above, the pivot portion **58** to pivotally support the openable split lid **571** is provided at the side portion **156** of the opening portion **56** of the front-seat center console portion **50.** Accordingly, the width of the above-described space **S** is configured to be relatively large compared to a structure which has no pivot portion at the side portion **156** of the opening portion **56** like the pivot portion **58** of the present embodiment.

In the present embodiment, the upward arrangement portion **65** may be arranged over a whole length, in the vertical direction, of the above-described space **S,** so that this space **S,** i.e., the wide dead space, can be utilized (see FIG. **10**).

Herein, the upward arrangement portion **65** is not limited to the above-described vertical arrangement (see FIGS. **7** and **9**), and it may be arranged in an inclined shape in a side view of the vehicle **V** such that its upper side is located at a rear position, which is not illustrated. In any case, the upward arrangement portion **65** is positioned on a forward side of the rear wall **534** of the object storage portion **53.**

Thus, as shown in FIG. **7****,** the upward arrangement portion **65** may be arranged in front of the front end portion **44F** of the second battery case **44** which is positioned on the rearward side of the rear wall **534** of the object storage portion **53.** Accordingly, since the upward arrangement portion **65** is not disposed on the side of the front end portion **44F,** the width, in the vehicle width direction, of the second battery case **44** is not restrained improperly by this upward arrangement portion **65,** thereby ensuring the sufficient battery volume.

Further, each of the pair of right-and-left upper-rearward arrangement portions **66** may be arranged in the longitudinal direction at the level corresponding to the rear-seat discharge port **60,** in other words, above the upper face portion **44u** of the front end portion **44F** of the second battery case **44.** A front end portion **66a** of the upper-rearward arrangement portion 66 may be connected to an upper end portion **65b** of the above-described upward arrangement portion **65.**

The upper-rearward arrangement portion **66** may be substantially horizontally arranged rearward from the upper end portion **65b** of the upward arrangement portion **65** to the rear-seat discharge port **60** which is positioned on the rearward side of the rear wall **534** of the object storage portion **53,** and its rear end portion **66b** is connected to the rear-seat discharge port **60.** Herein, the upper-rearward arrangement portions **66** may be configured such that their rear parts are respectively arranged on an inward side, in the vehicle width direction, of the vehicle body at a position which is located on the rearward side of the rear wall **534** of the object storage portion **53** and also on the forward side of the rear-seat discharge portion **60,** and their rear end portions **66b** (inward end portions in the vehicle width direction) are connected to the rear-seat discharge port **60** independently or in a joint manner.

Herein, as shown in FIG. **7****,** the second battery case **44** is configured as described above such that its front end portion **44F** extends forward beyond the rear end portion **50r** of the front-seat center console portion **50** and goes into the inside of the front-seat center console portion **50,** and the panel-shaped rear face potion **513** where the rear-seat discharge portion **60** is formed is arranged at a higher level than the upper face portion **44u** of the front end portion **44F** of the second battery case **44.** The rear end portion **(66b)** of the rear-seat supply duct **62** which is connected to the rear-seat discharge port **60,** i.e., the rear end portion **66b** of the upper-rearward arrangement portion **66,** is supported from just below by the front end portion **44F** of the second battery case **44** (not illustrated).

Particularly, the rear end portion **66b** of the upper-rearward arrangement portion **66** is fixedly attached to the upper face portion **44u** of the front end portion **44F** of the second battery case **44** via a bracket or the like (not illustrated).

### (Attaching Member 67 of Object Storage Porton 53 to Second Battery Case 44)

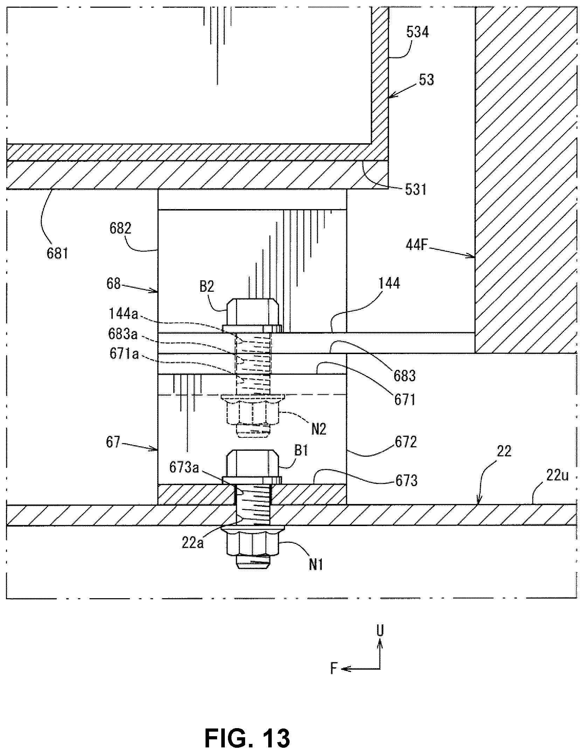

As shown in FIGS. **7****,** **11** and **13****,** the attaching member **67** to support the object storage portion **53** may be provided between the bottom wall **531** (see FIG. **13****)** of the object storage portion **53** and the upper face portion **22u** of the tunnel portion **22** inside the front-seat center console portion **50.** That is, the object storage portion **53** is supported at the upper face portion **22u** of the tunnel portion **22** via the attaching member **67.**

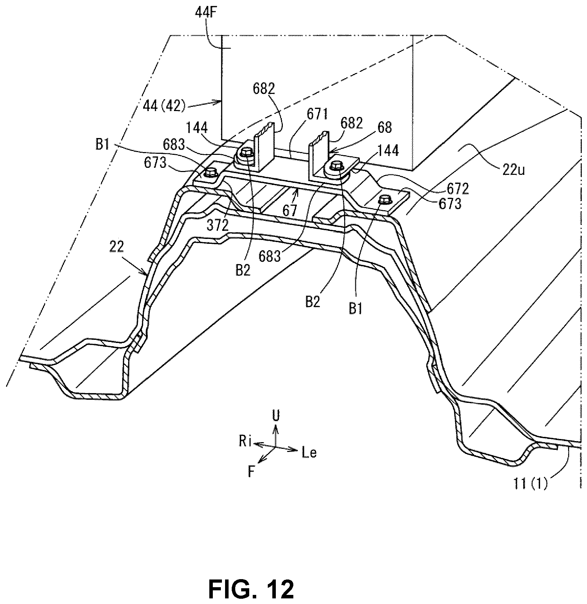

Meanwhile, as shown in FIGS. **7****,** **11** - **13****,** the front end portion **44F** of the second battery case **44** may extend forward to a position in the vicinity of a rearward side of the rear wall **534** of the object storage portion **53.** Further, the attaching member **67** to support the object storage portion **53** may also serve as another attaching member to support the front end portion **44F** of the second battery case **44.** Particularly, the object storage portion **53** of the front-seat center console portion **50** and the front end portion **44F** of the second battery case **44** are attached to the upper face portion **22u** of the tunnel portion **22** via the common attaching member **67.**

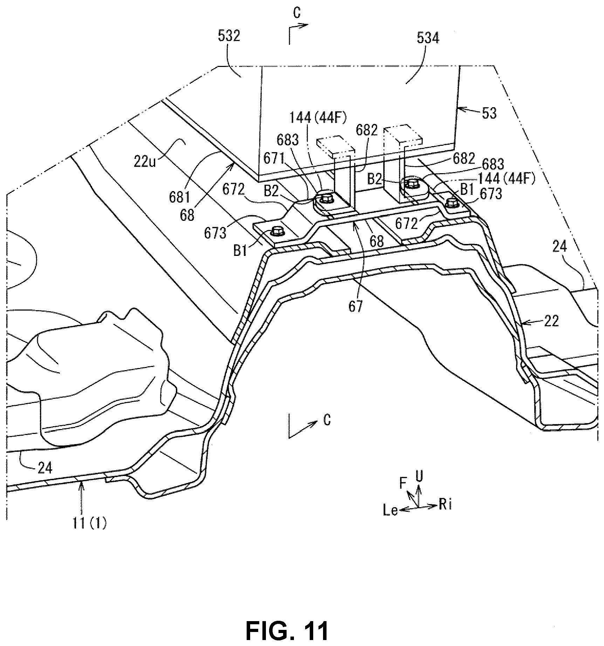

Specifically, as shown in FIGS. **11** - **13****,** the attaching member **67** may be a steel-plate member which is integrally formed by a support portion **671** which extends in the vehicle width direction along the upper face portion **22u** of the tunnel portion **22** so as to receive the rear part of the bottom wall **531** of the object storage portion **53** and the front end portion **44F** of the second battery case **44** thereon, right-and-left leg portions **672** which extend downward from right-and-left both end portions of the support portion **671,** and right-and-left flange portions **673** which extend outward from respective outward ends, in the vehicle width direction, of the leg portions **672** and are placed on the both sides of the upper face portion **22u** of the tunnel portion **22.** This attaching member **67** may be configured to have a roughly hat-shaped cross section. As shown in FIG. **13****,** for example, bolt insertion holes **671a** are formed at both sides of the support portion **671** such that they vertically penetrate these both sides, and also bolt insertion holes **673a** are formed at the right-and-left flange portions **673** such that they vertically penetrate these flange portions.

Particularly, as shown in FIGS. **11** - **13****,** at the front end portion **44F** of the second battery case **44** are provided a pair of flange portions **144** which extend forward from right-and-left both sides of its lower end portion. A vertically-penetrating bolt insertion hole **144a** may be formed at each tip end portion (front end portion) of the pair of flange portions **144** as shown in FIG. **13****.**

As shown in FIG. 11 - 13, a box support bracket **68** may be provided below the object storage portion **53** and above the attaching member **67.** The box support bracket **68** may comprise a bottom-wall reinforcement portion **681** which supports at least a rear part, in the longitudinal direction, of the bottom wall **531** of the object storage portion **53** and may be joined to a lower face of the bottom wall **531** for reinforcement (see FIGS. **11** and **13**), a pair of right-and-left support leg portions **682** which extend downward from right-and-left both sides of the bottom-wall reinforcement portion **681,** and right-and-left flange portions **683** which extend toward the outward side, in the vehicle width direction, from respective lower end portions of the support leg portions **682.** As shown in FIG. **13****,** each tip end portion of the flange portions **683** of the box support bracket **68** has a bolt insertion hole **683a** which vertically penetrates that.

The above-described flange portions **673** of the attaching member **67** may be placed on the upper face portion **22u** of the tunnel portion **22** in a state where their bolt insertion holes **673a, 22a** (see FIG. **13**) match each other in the vertical direction at the right-and-left sides. The flange portion **673** and the upper face portion **22u** may be fixedly fastened by using a bolt **B1** and a nut **N1** which are inserted into the bolt insertion holes **673a, 22a.**

Further, the flange portion **144** provided at the front end portion **44F** of the second battery case **44** and the flange portion **683** provided at the box support bracket **68** may be placed in order on the support portion **671** of the attaching member **67** in a state where the respective bolt insertion holes **144a, 683a, 671a** match each other in the vertical direction. Then, these flange portions **144, 683** are fastened together by using a bolt **B2** and a nut **N2** which are inserted into the bolt insertion holes **144a, 683a, 671a.**

Particularly, the attaching member **67** is provided just below the object storage portion **53** in the above-described embodiment, but it may be provided just below the front end portion **44F** of the second battery case instead. In any case, the front end portion **44F** of the second battery case **44** can be made to extend more close to the rear wall **534** of the object storage portion **53** compared to a case where the attaching member **67** is placed between the rear wall **534** of the object storage portion 53 and a front face of the front end portion **44F** of the second battery case **44.** Accordingly, the sufficient battery volume of the second battery **42** can be ensured.

### (Rear-Seat Center Console Portion 70)

As shown in FIGS. **1****,** **5** and **6****,** the above-described rear-seat center console portion **70** may comprise a top face portion **711** which is provided to rise from the rear-seat cushion panel **131** and forms its upper face as a resin-made interior member **71** and a pair of right-and-left side face portions **712** (the left-side one is only illustrated) which extend downward from right-and-left both ends of its upper end, which are all decorative panels.

The above-described second battery case **44** is stored inside the rear-seat center console portion **70** which is partitioned by the top face portion **711** and the right-and-left side face portions **712.** That is, the second battery case **44** is provided inside the rear-seat center console portion **70** over its roughly whole length so as to serve as a frame member of the rear-seat center console portion **70,** thereby reinforcing the rear-seat center console portion **70.**

Accordingly, the top face portion 711 and the right-and-left side face portions **712** may be supported by the rear-seat cushion panel **131** via brackets (not illustrated) disposed inside the rear-seat center console portion **70,** but these portions **711, 712** may be fixedly attached to the second battery case **44** instead (not illustrated). Specifically, the top face portion **711** may be supported by the second battery case **44.**

As shown in FIGS. **1****,** **5** and **6****,** the rear-seat center console portion **70** may be provided at a central part, in the vehicle width direction, of the cabin **2** continuously, in the longitudinal direction, to the above-described front-seat center console portion **50.** Specifically, as shown in FIGS. **5** and **6****,** the two center console portions **70, 50** may be connected such that a front end portion of the top face portion **711** of the rear-seat center console portion **70** and a lower end portion of the rear face portion **513** which is provided at the rear-seat discharge port **60** of the front-seat center console portion **50** are connected through engagement or the like, likewise, a front end portion of the right-side side face portion (not illustrated) of the rear-seat center console portion **70** and a rear end portion of the right-side side face portion **511** (see FIG. **10****)** of the front-seat center console portion **50** may be connected, and a front end portion of the left-side side face portion **712** of the rear-seat center console portion **70** and a rear end portion of the left-side side face portion **511** of the front-seat center console portion **50** may be connected. Particularly, the right-and-left side face portions **511** of the front-seat center console portion **50** and the right-and-left side face portions **712** of the rear-seat center console portion **70** are longitudinally connected at a border of those substantially in a flat-surface manner.

The rear-seat center console portion **70** may comprise, in other words, a rear-seat center console rear-portion **72** which is located above the rear-seat cushion panel **131** and a rear-seat center console front-portion **73** which extends forward before the kick-up portion **12.** Further, the rear-seat center console front-portion **73** may be provided with an upper portion **74** which has the second battery case **44** therein like the rear-seat center console rear-portion **72** and a lower portion **75** which is arranged just below the upper portion **74** and the second battery case **44** and does not have the second battery case **44** therein.

Herein, the top face portion **711** and the right-and-left side face portions **712** (the left-side one is only illustrated) of the rear-seat center console portion **70** may be configured to extend between the rear-seat center console rear-portion **72** and the rear-seat center console front-portion **73** (the upper portion **74** and the lower portion **75).**

Particularly, at the lower portion **75** without the second battery case **44** therein is formed an opening portion **76** (penetration hole) which penetrates in the vehicle width direction. This opening portion **76** provides the ventilating performance, in the vehicle width direction, of a foot space of the rear-seat passengers and also constitutes an exterior design which can provide the rear-seat passenger with a feeling of release.

That is, providing the opening potion **76** at the level corresponding to the rear-seat passenger's foot can properly improve the comfortableness of the rear-seat passenger without providing the passenger with a feeling of being oppressed, maintaining independence of each of the rear seats **30, 31** which is obtained by partitioning the right-and-left rear seats **30, 31** by the rear-seat center console portion **70.**

Decorative panels (not illustrated) are provided at respective inner surfaces, i.e., an upper-side inner surface, a lower-side inner surface, a front-side inner surface, and a rear-side inner surface of the opening portion **76** which is formed in a cylindrical shape extending in the vehicle width direction, at the lower portion **75,** thereby ensuring an exterior design of the inner surfaces of the opening portion **76.**

The size, forming position, number and the like of the opening portion **76** are not limited to the present embodiment. For example, while the opening portion **76** of the present embodiment is provided at a central portion of the lower portion **75** in the elevational view (i.e., in the side view of the vehicle **V),** at least one of peripheral edges of a front edge, a rear edge, a lower edge and the like of the opening portion **76** may not be provided, the opening portion **76** may be formed at an entire part of the lower portion **75,** or the plurality may be arranged at the lower portion **75.** Furthermore, the opening portion **76** may be provided between the upper portion **74** and the lower portion **75** which are separated from each other in the vertical direction.

In addition, the thickness, in the vehicle width direction, of the lower portion **75** is not limited to that which corresponds to the second battery case **44,** and the right-and-left side face portions **712** (the left-side one is illustrated only) which forms the lower portion **75** may be arranged such that the distance, in the vehicle width direction, of the right-and-left side face portions **712** is narrower than the width, in the vehicle width direction, of the second battery case **44.**

### (Top Face Portion 711 of Rear-Seat Center Console Portion 70)

As shown in FIGS. **1****,** **5** and **7****,** the top face portion **711** of the rear-seat center console portion **70** may be provided with a shallow tray **77** which can receive an object, such as a mobile terminal, and a protrusion portion **80** which protrudes upward in front of the tray **77.**

As shown in FIG. **5****,** the tray **77** may comprise a bottom face portion **78a** which is horizonal in the vehicle width direction and right-and-left vertical wall portions **79** which rises from right-and-left both edges of the bottom face portion **78** and extend continuously at the same level along its side edges extending in the longitudinal direction, which is configured in a recess shape such that its lateral cross section opens upward.

As shown in FIG. **8****,** the tray **77** may extend in the longitudinal direction as a placement portion where the middle seatback portion **32** forward folded is placed, having its longitudinal length which corresponds to the longitudinal length of the middle seatback portion **32** forward folded and having it lateral width which is substantially the same as the lateral width of the middle seatback portion **32** forward folded.

The protrusion portion **80** may protrude upward beyond the upper ends of the right-and-left vertical wall portions **79** of the tray **77.** An upper face portion of the protrusion portion **80** may comprise a protrusion upper-face rear portion **81** which extends forward from a front end of the tray **77** and is inclined such that its front side is located at a higher level and a protrusion upper-face front portion **82** which extends forward from a front end of the protrusion upper-face rear portion **81** and is slightly inclined such that its front side is located at a lower level.

Specifically, as shown in FIG. **5****,** the bottom face portion **78** of the tray **77** may be configured to be horizonal except its front-side part, and the front-side part of the bottom face portion **78** may be configured to be inclined such that its front side is located at a higher level which corresponds to the level of the vertical wall portion **79.** The protrusion upper-face rear portion **81** of the protrusion portion **80** may be configured to extend obliquely forward-and-upward from a front end of the front-side part of the bottom face portion **78** of the tray **77** in such a manner that this protrusion upper-face rear portion **81** faces the rear-seat passenger in the side view of the vehicle **V.**

Further, the protrusion upper-face rear portion **81** of the protrusion portion **80** may be located at a position where the rear-seat passenger's hand can reach, and this portion **81** may serve as a function panel face which provides at least one of an input function and an output function for the rear-seat passenger's input/output operation of various kinds of information.

Particularly, the output function is a display (indication portion) or a sound output portion, such as a speaker. In a case where the output function is the display, the function panel face is arranged so that a whole part of an image indicated on the display can be captured (viewed) by the rear-seat passenger.

The display is a device to project the image by light emitting of a screen, and a liquid crystal display, an organic EL display or the like are applicable. The display may comprise a tach panel which is operable through a touching operation by the passenger.

The input function is an operation input portion to operate various kinds of vehicle onboard electric device, such as an audio device or a rear-seat heater, or a socket (connection terminal). The operation input portion may include a pushing button, a dial, a dial, a joystick or the like, and the socket incudes a USB socket, an AC socket, and a DC socket, but their arrangement number or kinds are not limited in particular.

In the present embodiment, as shown in FIG. **5****,** operation input portions **83** of the audio device, the rear-seat heater, and the like, two USB socket **84,** and an AC sockets **85** may be provided at the protrusion upper-face portion **81** as the function panel face.

Further particularly, as shown in FIG. **8****,** the protrusion upper-face portion **81** of the protrusion portion **80** rises along a shape, in the side view of the vehicle **V,** of a front portion of the middle seatback portion **32** forward folded, having substantially the same height as the thickness, in the vertical direction, of the front portion of the middle seatback portion **32** forward folded at the top face portion **711** of the rear-seat center console portion **70.**

The top face portion **711** of the rear-seat center console portion **70** of the present embodiment may smoothly rise upward from the front part of the bottom face portion **78** of the tray **77** toward the protrusion upper-face rear portion **81.** Thereby, as shown in FIG. **8****,** the front portion of the middle seatback portion **32** forward folded faces the protrusion upper-face rear portion **81** of the protrusion portion **80** from behind, thereby protecting the protrusion upper-face rear portion **81** against an outer factor, such as an outer force.

Further, as described above, the middle seatback portion **32** positioned in the forward-folded state may be supported substantially horizontally at least by the tray **77** at the top face portion **711** of the rear-seat center console portion **70,** and the back face portion **32u** of the middle seatback portion **32** may form the flat surface, in the vehicle width direction, together with the back face portions **30Bu, 31Bu** of the seatbacks **30B, 31B** of the right-and-left rear seats **30, 31** forward folded (see FIG. **4**) and may also form the flat surface, in the longitudinal direction, together with the upper face portion **43u** of the first battery case **43** (see FIGS. **4** and **8****).**

As shown in FIGS. **1****,** **5****,** **6** and **8****,** the protrusion upper-face front portion **82** of the protrusion portion **80** may be configured to be slightly inclined such that its front end is located at a position nearly below a lower edge of the rear-seat discharge portion **60,** i.e., at a lower edge of the rear face portion **513** and its rear end is located at a front end of the protrusion upper-face rear portion **81.** Thereby, wind (conditioning air) discharged from the rear-seat discharge portion **60** can be made to flow toward the rear-seat passenger without being hindered by the protrusion portion **80.**

Moreover, as shown in FIGS. **4** and **8****,** the protrusion upper-face front portion **82** of the protrusion portion **80** may be provided to form a substantially flat surface, in the longitudinal direction, together with the back face **32u** of the middle seatback portion **32** forward folded. Thereby, the protrusion upper-face front portion **82** of the protrusion portion **80** can be configured to be part of the above-described flat and enlarged baggage-compartment floor surface **2Fa.**

Particularly, as shown in FIG. **1****,** the cabin structure of the vehicle **V** of the present embodiment is provided with the floor panel 1 (floor) forming the floor surface of the cabin **2,** the seat cushions **30C, 31C** of the right-and-left rear seats **30,** 31 arranged to be laterally separated above the floor panel 1, the seatbacks **30B, 31B** of the rear seats **30, 31** which are arranged to be laterally separated and independently forward foldable onto the seat cushions **30C, 31C,** and the first battery case **43** arranged above the baggage-compartment floor panel **132** forming the floor surface (bottom face) of the baggage compartment **2a** of the floor panel 1 which is located behind the seat cushions **30C, 31C.** Further, as shown in FIG. **2****,** this cabin structure of the vehicle **V** comprises the second battery case **44** arranged between the right-and-left seat cushions **30C, 31C** above the floor panel 1, the rear-seat center console portion **70** (console) covering over the upper face portion **44u** and the right-and-left side face portions of the second battery case **44,** and, as shown in FIGS. **4** and **8****,** and the middle seatback portion **32** which are arranged between the seatbacks **30B, 31B** of the right-and-left rear seats **30, 31** and pivotally supported at its lower portion so as to forward folded toward the rear-seat center console portion **70.** Moreover, as shown in FIG. 7, the longitudinal thickness **(L32)** of the middle seatback portion **32** positioned in the upright position is configured to be smaller than that **(L30B,** for example) of each of the seatbacks **30B, 31B** of the right-and-left rear seats **30, 31** positioned in the upright position, as shown in FIGS. **4** and **8****,** the front end portion **43f** of the first battery case **43** is positioned close to the rear end portions **30Br, 31Br** of the seatbacks **30B, 31B** of the rear seats **30, 31** which are positioned in the forward-folded state, the respective back face portions **30Bu, 31Bu, 32u** of the seatbacks **30B, 31B** and the middle seatback portion **32** which are positioned in the forward-folded state form the flat surface extending in the vehicle width direction, and also form the enlarged baggage-compartment floor surface **2Fa** together with the upper face portion **43u** of the first battery case **43.**

According to this structure, the height (level) of the flat and/or enlarged baggage-compartment floor surface **2Fa** which is formed by the seatbacks **30B, 31B** of the rear seats **30, 31** and the middle seatback portion **32** which are all forward folded can be properly low and also the floor area of the baggage compartment **2a** can be properly enlarged, ensuring the sufficient battery volume.

Specifically, since not only the first battery case **43** but the second battery case **44** arranged between the right-and-left seat cushions **30C1, 31C1** are provided above the floor panel **1,** the sufficient battery volume can be ensured.

Further, as shown in FIG. **8****,** since the front end portion **43f** of the first battery case **43** is provided close to the rear end portions **30Br, 31Br** of the seatbacks **30B, 31B** of the rear seats **30, 31** which are positioned in the forward-folded state and also the second battery case **44** is arranged between the right-and-left seat cushions **30C, 31C,** the substantially-flat and enlarged baggage-compartment surface **2Fa** can be formed in a state where the seatbacks **30B, 31B** of the rear seats **30, 31** and the middle seatback portion **32** are all forward folded.

Moreover, since the second battery case **44** arranged above the floor panel **1** is provided between the seat cushions **30C, 31C** of the rear seats **30, 31** as described above, the height (level) of the back face portions **30Bu, 31Bu** of the seatbacks **30B, 31B** forward folded can be made properly low compared to a case where this battery case **44** is arranged below the seat cushions **30C, 31C** of the rear seats **30, 31,** for example.

Meanwhile, since the longitudinal thickness of the middle seatback portion **32** positioned in the upright state is set to be smaller than that of the seatbacks **30B, 31B** of the rear seats **30, 31** positioned in the upright state **(L32 < L30B** (see FIG. **7**)), the height between the rear seats **30, 31** when the middle seatback portion 32 is forward folded can be made properly low.

Accordingly, without improperly reducing the battery volume, the height (level) of the flat and enlarged baggage-compartment floor surface **2Fa** when the seatbacks **30B, 31B** of the rear seats **30, 31** and the middle seatback portion **32** are all forward folded can be properly low and the floor area of the baggage compartment **2a** can be properly enlarged.

In the present embodiment, as shown in FIG. **2****,** the floor panel **1** may comprise the front floor panel **11** having the tunnel portion **22** extending in the longitudinal direction, the kick-up portion **12** rising from the rear end portion of the front floor panel **11,** and the rear-seat cushion panel **131** extending rearward from the upper end portion of the kick-up portion **12,** where the seat cushions **30C, 31C** of the rear seats **30, 31** are placed. The second battery case **44** is arranged above the rear-seat cushion panel **131** and extends forward beyond the kick-up portion **12** at the position above the tunnel portion **22.**

According to this structure, since the second battery case **44** is arranged to extend forward beyond the kick-up portion **12,** the height between the seat cushions **30C, 31C** of the rear seats **30, 31** can be made properly low, ensuring the sufficient battery volume.

In the present embodiment, as shown in FIG. **5****,** at the top face portion **711** of the rear-seat center console portion **70** may be provided the tray **77** as the placement portion for the middle seatback portion **32** forward folded and extending in the longitudinal direction and the protrusion portion **80** protruding beyond the tray **77** at the position in front of the tray **77.** Further, the function (panel) face rising along the shape, in the side view of the vehicle **V,** of the front portion of the middle seatback portion **32** forward folded at the top face portion **711** of the rear-seat center console portion **70** is provided at the face of the protrusion portion **80** which faces the rear-seat passenger, i.e., at the protrusion upper-face rear portion **81.**

According to this structure, as shown in FIG. **5****,** since the front portion of the middle seatback portion **32** forward folded come to be close to or substantially contact the protrusion upper-face rear portion **81** as the function (panel) face from behind, the function (panel) face of the rear-seat center console portion **70** can be protected by this front portion of the middle seatback portion **32.** Further, the tray **77** can firmly support the middle seatback portion **32** which is forward folded and placed on the tray **77.**

In the present embodiment, as shown in FIG. **8****,** the protrusion portion **80** and the middle seatback portion **32** may be configured such that the protrusion upper-face front portion **82** and the back face portion **32u** of the forward-folded middle seatback portion **32** form the substantially flat surface in the longitudinal direction. According to this structure, there occurs substantially no step (no level difference) between the protrusion upper-face front portion **82** and the back face portion **32u,** thereby contributing to forming the flat floor surface of the baggage compartment **2a.**

Another embodiment of the present invention will be described referring to the drawings.

Herein, this embodiment has the structure recited in Claim 1 of the present invention as well as the above-described embodiment, and therefore its specific illustration and description will be omitted here.

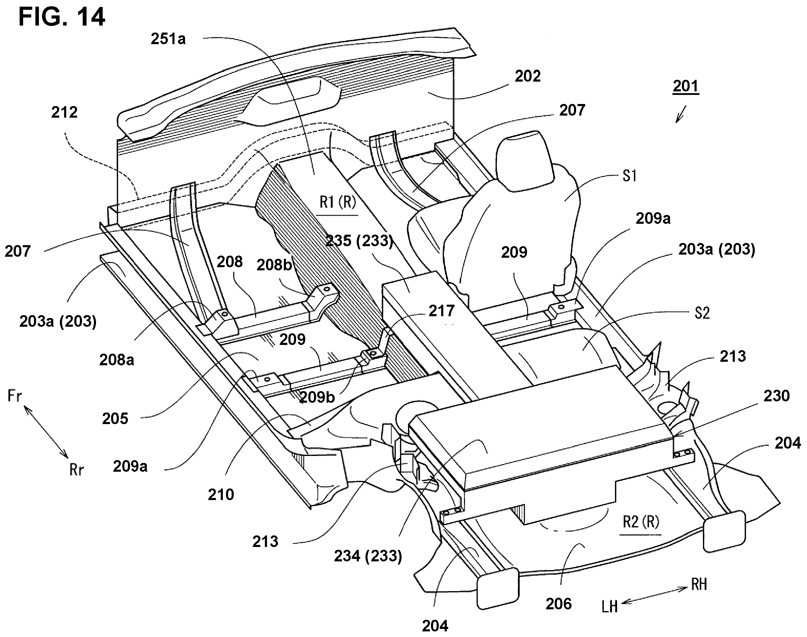

The vehicle of this embodiment may be an electromotive vehicle which uses a drive force of an output of a motor, in which part of a battery to supply an electric power to the motor is disposed in a cabin **R.** A cabin structure of this kind of electromotive vehicle **201** will be described referring to FIGS. **14** - **19****.**

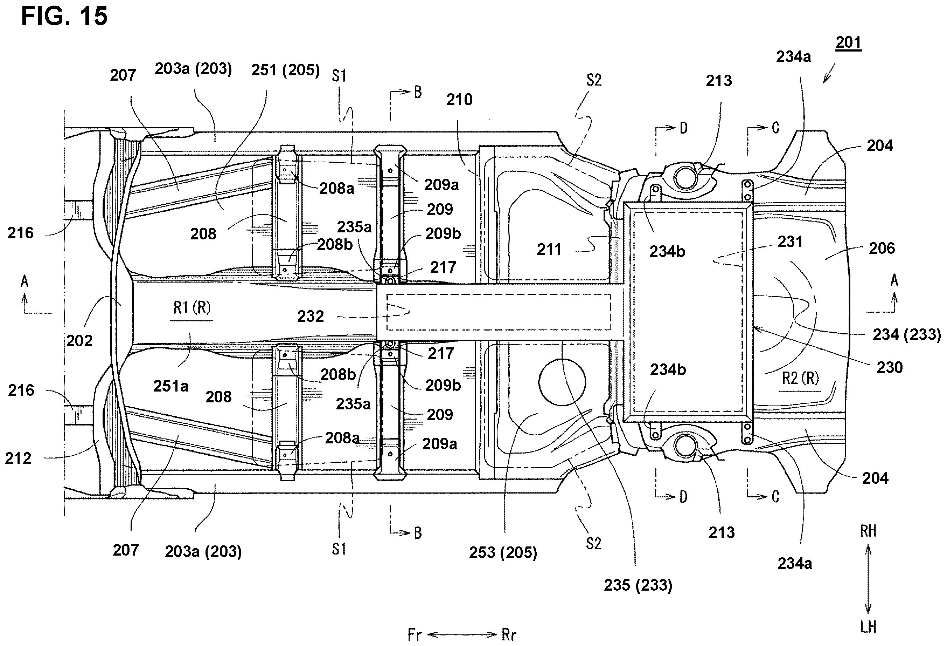

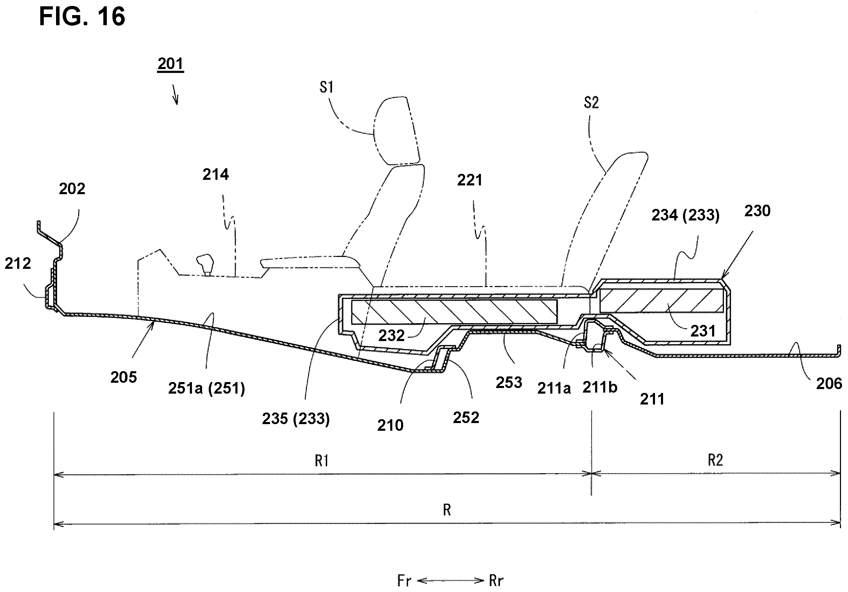

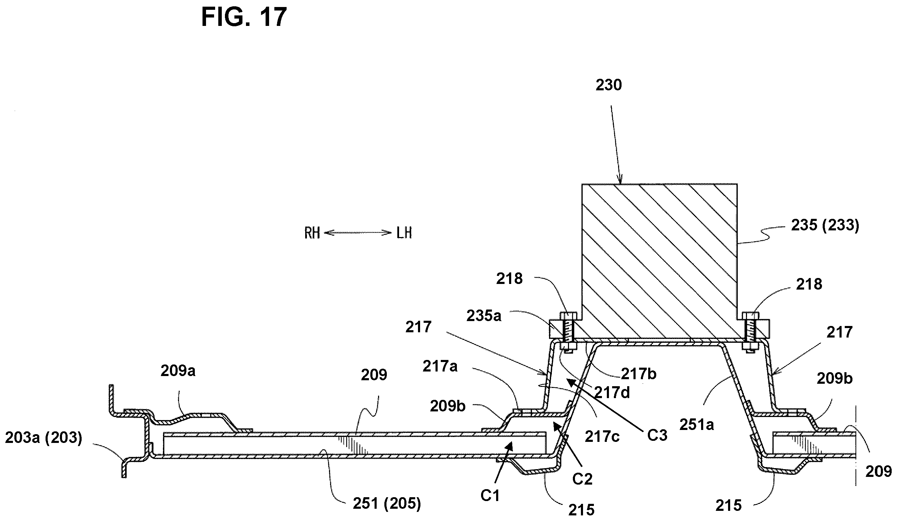

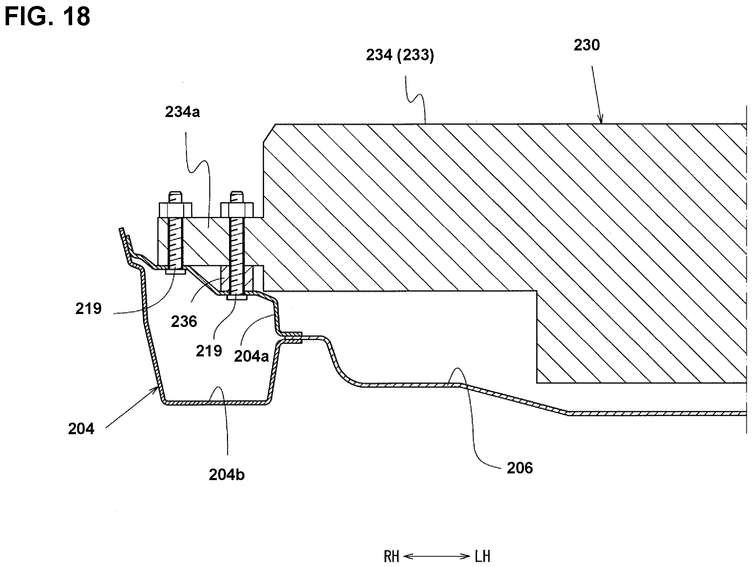

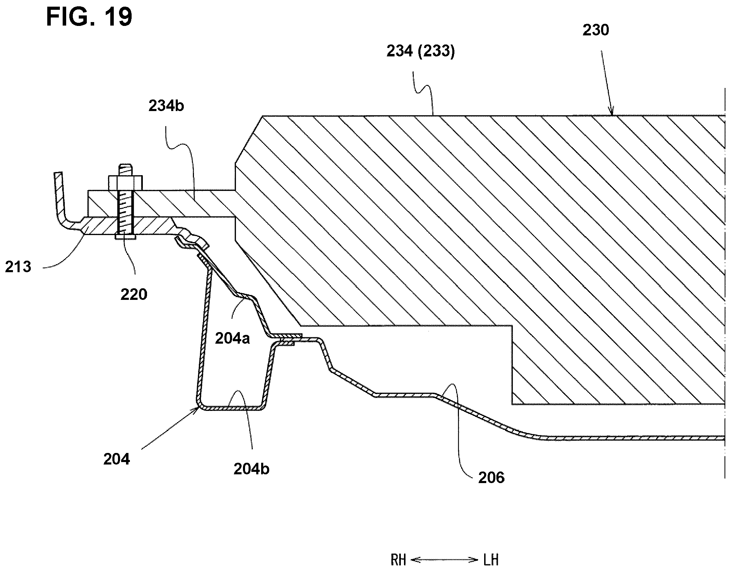

FIG. **14** is an exterior perspective view showing an exterior of the cabin **R** of the electromotive vehicle **201,** when viewed from the rear side of the vehicle, FIG. **15** is a plan view showing the exterior of the cabin **R** of the electromotive vehicle **201,** FIG. **16** is a sectional view taken along line A-A of FIG. **15****,** and FIG. **17** is a sectional view taken along line B-B of FIG. **15****.** Further, FIG. **18** is a sectional view taken along line C-C of FIG. **15** and FIG. **19** is a sectional view taken along line D-D of FIG. **15****.**

Herein, in order to clarify illustration in FIG. **14****,** a left-side one of right-and-left front seats S1 and a left-side one of right-and-left rear seats **S2** are not illustrated. Likewise, a right-side part of the vehicle is illustrated only in FIGS. **17 - 19** for the same reason.

In the figures, an arrow Fr and an arrow Rr show the longitudinal direction, the arrow Fr shows a front (forward) direction, and the arrow Rr shows a rear (rearward) direction. Further, an arrow Rh and an arrow Lh show the vehicle width direction, the arrow Rh shows a right (rightward) direction, and the arrow Lh shows a left (leftward) direction.

As shown in FIGS. **14** and **15****,** the electromotive vehicle **201** of the present embodiment comprises the cabin **R** which is composed of a passenger compartment **R1** where a pair of right-and-left front seats **S1** and a pair of right-and-left rear seats **S2** for seating of passengers are arranged and a baggage compartment **R2** which is positioned behind the passenger compartment **R1** where baggage and the like are loaded.

This electromotive vehicle **201** may comprise, as shown in FIGS. **14** and **15****,** a dash panel **202** which forms a front wall of the cabin **R,** a pair of right-and-left side sills **203** which extend rearward from respective lower portions of both ends, in the vehicle width direction, of the dash panel **202,** and a pair of right-and-left rear side frames **204** which are connected to respective rear portions of the side sills **203** and extend rearward.

The electromotive vehicle **201** further comprises a front floor panel **205** which forms a floor surface of the passenger compartment **R1** between the side sills **203,** a rear floor panel **206** which forms a floor surface of the baggage compartment **R2** between the rear side frames **204,** and a pair of right-and-left floor frame uppers **207** which extend in the vehicle longitudinal direction from the dash panel **202** to the front floor panel **205.**

In addition, this electromotive vehicle **201** may have, as shown in FIGS. **15** and **16****,** one or more cross members, particularly a pair of right-and-left first floor cross members **208,** a pair of right-and-left second floor cross members **209,** and a pair of right-and-left third floor cross members **210,** which all interconnect the right-and-left side sills **203** in the vehicle width direction, and a fourth floor cross member **211** which interconnects the right-and-left rear side frames **204** in the vehicle width direction.

Subsequently, respective elements of the electromotive vehicle **201** will be described further specifically. As shown in FIG. **14****,** the dash panel **202** is a panel member with a specific thickness in the vehicle longitudinal direction, which is configured such that a central portion, in the vehicle width direction, of its lower end protrudes upward.

Herein, both ends, in the vehicle width direction, of the dash panel **202** may be connected to hinge pillars (not illustrated) which are provided to stand at respective front ends of the right-and-left side sills **203.** A dash cross member **212** which extends in the vehicle width direction along the lower end of the dash panel **202** and are connected to the hinge pillars (not illustrated) may be joined to a front face of the dash panel **202** as shown in FIGS. **14** and 16.

The dash cross member **212** is a vehicle-body frame member with a cross section which forms a closed-cross section with the dash panel **202.** The cross section of the dash cross member **212** may be of a roughly hat shape protruding in the vehicle front direction.

Each of the right-and-left side sills **203** may be another vehicle-body frame member with a closed-cross section, which is formed by a side sill inner **203a** which is positioned on an inward side, in the vehicle width direction, thereof and a side sill outer (not illustrated) which is positioned on an outward side, in the vehicle width direction, thereof as shown in FIG. **14****.**

Each of the right-and-left rear side frames **204** may be further another vehicle-body frame member with a closed-cross section, a front end portion of which is joined to an inward side, in the vehicle width direction, of a rear part of the side sill **203,**

This rear side frame **204** is formed by a side frame upper **204a** which is positioned at an upper side (see FIG. **18**) and a side frame lower **204b** which is positioned at a lower side (see FIG. **18**).

Further, as shown in FIGS. **14** and **15****,** a damper support member **213** to support an upper end of a rear suspension damper (not illustrated) may be joined to the side frame upper **204a** of the rear side frame **204** at a position in back of the fourth floor cross member **211** described later.

This damper support member **213,** which is particularly a high-rigidity member which is made of aluminum diecast, for example, may be joined to a rear side panel (not illustrated) which forms an inner wall of the baggage compartment **R2,** the side frame upper **204a,** and the fourth floor cross member **211** described later, thereby serving as a vehicle-body frame member. Herein, a rear wheel (not illustrated) to be suspended by the rear suspension damper may be disposed below the damper support member **213.**

As shown in FIGS. **15** and **16****,** the front floor panel **205** may be formed by a plate-shaped floor-panel front portion **251** which is joined to a lower end of the dash panel **202,** a kick-up portion **252** which rises upward from a rear end of the floor-panel front portion **251,** and a floor-panel rear portion **253** which extends rearward from an upper end of the kick-up portion **252.**

More specifically, as shown in FIG. **15****,** the floor-panel front portion **251** may form a floor surface of the passenger compartment **R1** over a range, in the vehicle longitudinal direction, from the lower end of the dash panel **202** to a front end of the rear seat **S2.**

Further, as shown in FIGS. **14** - **16****,** a tunnel portion **251a** which protrudes upward with its longitudinal length extending from the dash panel **202** to the kick-up portion may be formed substantially at a central portion, in the vehicle width direction, of the floor-panel front portion **251.**

As shown in FIG. **17****,** the tunnel portion **251a** may be configured to have a roughly trapezoid-shaped cross section, and some devices, such as the shift lever, are fixed to its upper face. Herein, a font-seat center console **214** may be fixedly arranged at a position adjacent, in the vehicle width direction, to the right-and-left front seats **S1** as shown by a two-dotted broken line in FIG. **16****.**

Moreover, as shown in FIG. **17****,** a pair of right-and-left tunnel frames **215** which extend in the vehicle longitudinal direction along both-side lower ends of the tunnel portion **251a** may be joined to a lower face of the floor-panel front portion **251.** Each of these tunnel frames **215** may be another vehicle-body frame member which forms a closed-cross section with the floor-panel front portion **251,** and its front end may be connected to the dash cross member **212.**

The kick-up portion **252** may extend obliquely upward-and-rearward from a rear end of the floor-panel front portion **251** as shown in FIG. **16****.** The floor-panel rear portion **253** may extend, from an upper end of the kick-up portion **252,** rearward and then obliquely rearwardand-downward as shown in FIG. **16****.**

As shown by a two-dotted broken line in FIG. **15****,** a pair of sitting face portions (no reference number attached) for the rear seats **S2** may be fixedly placed onto the floor-panel rear portion **253** at both-side positions which are separated from each other in the vehicle width direction, interposing the central portion, in the vehicle width direction, of the floor-panel rear portion **253.**

The rear floor panel **205** may be a panel member which is configured to be recessed downwardly at its central portion, in the vehicle longitudinal direction and in the vehicle width direction, thereof, and as shown in FIG. **16****,** its front end is connected to a rear end of the front floor panel **205** via the fourth cross member **211** described later.

As shown in FIGS. **14** and **15****,** each of the right-and-left floor frame uppers **207** may be obliquely arranged between the side sill **203** and the tunnel portion **251a** of the front floor panel **205** inside the cabin **R** such that its rear end is positioned on the outward side, in the vehicle width direction, of its front end.

Particularly, as shown in FIG. **15****,** the floor frame upper **207** is arranged along an imaginary-straight line (not illustrated) which connects a rear end of the front side frame **216** extending forward from the dash panel **202** and an outward side, in the vehicle width direction, of the first floor cross member **208** described later.

This floor frame upper **207** may be provided as another vehicle-body frame member which is joined o the dash panel **202** and the floor-panel front portion **251** and its cross section forms a closed-cross section together with the floor-panel front portion **251.**

Further, a rear end portion of the floor frame upper **207** may be joined to a front end portion of a floor frame lower (not illustrated) which is joined to the lower face of the floor-panel front portion **251,** interposing the floor-panel front portion **251** therebetween. Herein, a rear end portion of the floor frame lower is connected to a front end portion of the rear side frame **204,** for example.

The right-and-left first floor cross members **208** may interconnect the right-and-left side sills **203** via the tunnel portion **251a** of the front floor panel **205** at a central portion, in the vehicle longitudinal direction, of the floor-panel front portion **251.**

Particularly, the first floor cross member **208,** which is another vehicle-body frame member with its cross section which forms a closed-cross section together with the floor-panel front portion **251,** is joined to an upper face of the floor-panel front portion **251.**

Further, as shown in FIGS. **14** and **15****,** the first floor cross member **208** may be connected to the side sill **203** via a first outside attachment portion **208a** at an outward side, in the vehicle width direction, thereof, and its inward side is connected to the tunnel portion **251a** via a first inside attachment portion **208b.**

Particularly, the first outside attachment portion **208a** and the first inside attachment portion **208b** are members where respective front portions of a pair of seat rails of the front seat **S1** are fixedly fastened at a position below the upper face of the tunnel portion **251a.**

Further particularly, the first outside attachment portion **208a** is formed in a substantially box shape which opens downward and outward, and its cross section forms a closed-cross section together with the side sill **203** and the first floor cross member **208.**

Meanwhile, the first inside attachment portion **208b** is formed in the substantially box shape which opens downward and inward, and its cross section forms a closed-cross section together with the tunnel portion **251a** and the first floor cross member **208.**

Further, as shown in FIG. **15****,** the right-and-left second floor cross members **209** may interconnect the right-and-left side sills **203** via the tunnel portion **251a** of the front floor panel **205** at a central portion, in the vehicle longitudinal direction, of the floor-panel front portion **251** between the first floor cross member **208** and the kick-up portion **252.**

Particularly, the second floor cross member **209** is another vehicle-body frame member with its cross section which forms a closed-cross section **C1** together with the floor-panel front portion **251,** which is joined to the upper face of the floor-panel front portion **251.**

As shown in FIGS. **14** and **15****,** the second floor cross member **209** is connected to the side sill **203** via a second outside attachment portion **209a** at its outward side, and its inward side is connected to the tunnel portion **251a** via a second inside attachment portion **209b.**

Herein, the second outside attachment portion **209a** and the second inside attachment portion **209b** may be members where respective rear portions of the front seat **S1** are fixedly fastened at the position below the upper face of the tunnel portion **251a.**

Particularly, the second outside attachment portion **209a** is, as shown in FIG. **17****,** formed in a substantially box shape which opens downward and outward, and its cross section forms a closed-cross section together with the side sill **203** and the second floor cross member **209.**

Meanwhile, the second inside attachment portion **209b** may be, as shown in FIG. **17****,** formed in the substantially box shape which opens downward and inward, and its cross section forms a closed-cross section **C2** together with the tunnel portion **251a** and the second floor cross member **209.**

As shown in FIG. **17****,** a fastening bracket **217** which has a substantially crank-shaped cross section and where a battery unit **230** described later may be fixedly fastened is joined to respective upper faces of the second inside attachment portions **209b** of the right-and-left second floor cross members **209.** This fastening bracket **217** may form a pair of right-and-left closed-cross sections **C3** together with the tunnel portion **251a** and the second inside attachment portions **209B** as shown in FIG. **17****,** thereby forming a high-rigidity portion at the tunnel portion **251a.**

Specifically, the fastening backet **217** is, as shown in FIG. **17****,** integrally formed by a pair of flat-plate shaped lower base portions **217a** which are joined to the upper faces of the second inside attachment portions **209b,** a flat-plate shaped upper base portion **217b** which is joined to the upper face of the tunnel portion **251a,** and a pair of flat-plate shaped connection portions **217c** which face both side faces of the tunnel portion **25a** with a specified gap therebetween.

Further, at each of the upper base portions **217b** of the fastening bracket **217** may be formed a bolt insertion whole (no reference number attached) where a bolt **218** to be used for fixing of the battery **230** described later is inserted. A weld nut **217d** to engage with the bolt **218** is joined to a lower face of each of the upper base portions **217b.**

The third floor cross member **210** may be another vehicle-body frame member with its cross section which forms a closed-cross section together with the front floor panel **205,** and may be joined to a rear end of the floor-panel front portion **251** and a front end of the floor-panel rear portion **253,** straddling the kick-up portion **252** as shown in FIG. **16****.**

The fourth floor cross member **211** may be arranged at a border of the floor-panel rear portion **253** and the rear floor panel **206** as shown in FIG. **16****.** This fourth floor cross member **211** is another vehicle-body frame member which has a closed-cross section, which is formed by a cross member upper **211a** which is located at an upper side and a cross member lower **211b** which is located at a lower side.

In the electromotive vehicle **201** provided with the above-described vehicle body, as shown in FIGS. **14 - 16****,** the battery unit **230** to supply the electric power to the motor may be arranged over a range of the passenger **R1** and the baggage compartment **R2.** This battery unit **230** comprises, as shown in FIGS. **15** and **16****,** a first battery **231** arranged in the baggage compartment **R2,** a second battery **232** arranged in the passenger compartment **R1,** and a battery case **233** storing and holding these batteries as a unit.

Particularly, the first battery **231** is configured to be relatively long in the vehicle width direction and roughly rectangular in the plan view, and provided at a front part of the rear floor panel **206** such that its rear side is positioned close to a seatback (no reference number attached) of the rear seat **S2.**

Meanwhile, as shown in FIG. **5****,** the second battery **232** may be configured to be also roughly rectangular in the plan view but longer and narrower than the first battery **231,** which is arranged between the right-and-left rear seats **S2.** Herein, these batteries **231, 232** are configured to be the lithium-ion battery or the like.

As shown in FIGS. **15** and **16****,** the battery case **233** may be a high-rigidity case member which is made of the aluminum dicast, for example, which is formed in the roughly T-letter shape in the plan view by a case rear portion **234** to store and hold the first battery **231** and a case front portion **235** to store and hold the second battery **232.**

This battery case **233** may be formed by a plate-shaped lid portion (no reference number attached) which forms its upper face and a storage portion (no reference number attached) which has an upward open portion to be closed with the lid portion. The lid portion is fixedly fastened to the storage portion, and the storage portion is fixedly fastened to a high-rigidity portion of the vehicle body.

Particularly, as shown in FIG. **15****,** the case rear portion **234** is configured to have a roughly box shape with length, in the vehicle width direction, thereof extending from one of the rear side frames **204** to the other rear side frame **204** and length, in the longitudinal direction, thereof extending from the fourth floor cross member **211** to a central portion, in the vehicle longitudinal direction, of the rear floor panel **206.**

The case rear portion **234** may be, as shown in FIG. **15****,** provided with a pair of right-and-left first fixation portions **234a** to be fixed to the rear side frames **204** behind the damper support members **213** and a pair of right-and-left second fixation portion **234b** to be fixed to the damper support members **213.**

Particularly, as shown in FIGS. **15** and **18****,** each of the right-and-left first fixation portions **234a** has a flat-plate shape, which protrudes to the outward side, in the vehicle width direction, from a side face of a rear end portion of the case rear portion **234,** and is fixedly fastened to two weld bolts **219** which are provided at the rear side frame **204** with a specified distance, in the vehicle width direction, therebetween. Herein, the first fixation portion **234a** may be fixed to the rear side frame **204** in a state where a spacer **236** is interposed between a lower face of its inward side and an upper face of the rear side frame **204.**

Meanwhile, as shown in FIGS. **15** and **19****,** each of the right-and-left second fixation portions **234b** may have a flat-plate shape, which protrudes to the outward side, in the vehicle width direction, from a side face of a front end portion of the case rear portion **234,** and is fixedly fastened to a single weld bolts **220** which are provided at the damper support member **213.**

The case front portion **235** divides a foot space of the rear seats **S2** in the vehicle width direction, and its front end is located inside the front-seat center console **214** as shown in FIGS. **15** and **16****.**

Particularly, the case front portion **235** has its longitudinal length extending from a front end of the case rear portion **234** to the second floor cross member **209,** and is formed in a roughly box shape such that its upper face is located below an upper face of the case rear portion **234.**

Herein, as shown by a two-dotted broken line in FIG. **16****,** the case front portion **235** may be disposed between the right-and-left rear seats **S2** and covered with the rear-seat center console **221** which extends rearward continuously from the front-seat center console **214.**

The case front portion **235** may be, as shown in FIG. **15****,** provided with a pair of right-and-left third fixation portions **235a** to be fixed to a closed-cross section portion which is formed by the floor-panel front portion **251** and the second floor cross members **209** and the second inside attachment portions **209b.**

Particularly, as shown in FIGS. **15** and **17****,** each of the right-and-left third fixation portions **235a** has a flat-plate shape which protrudes to the outward side, in the vehicle width direction, from s side face of s front end portion of the case front portion **235,** and is fixedly fastened to the fastening bracket **217** by the bolts **218.**

As described above, the case rear portion **234** of the battery unit **230** may interconnect, in the vehicle width direction, the high-rigidity portions (the right-and-left rear side frames **204** and the right-and-left damper support members **213)** which are separated from each other in the vehicle longitudinal direction, interposing the rear suspension damper.

Further, the case front portion of the battery unit **230** may connect the case rear portion **234** to the high-rigidity portion (the close-cross section portion **C1** formed by the second floor cross member 209, the closed-cross section portion **C3** formed by the fastening backet **217,** and the closed-cross section portion **C2** formed by the second inside attachment portion **209b)** which is positioned in front of the rear seat **S2.**

In other words, the electromotive vehicle **201** may connect the right-and-left rear side frame **204** and the right-and-left damper support member **213** to the high-rigidity portion (the close-cross section portion **C1** formed by the second floor cross member **209,** the closed-cross section portion **C3** formed by the fastening backet **217,** and the closed-cross section portion **C2** formed by the second inside attachment portion **209b)** which is positioned in front of the rear seat **S2** via the battery unit **230.**

As described above, the cabin structure of the electromotive vehicle **201** of the present embodiment comprises the front floor panel **205** which forms the floor surface of the passenger compartment R1 and the right-and-left rear seats **S2** which are provided above the front floor panel **205** such that these seats **S2** are separated from each other in the vehicle width direction and located at the rearmost position.

The cabin structure of the electromotive vehicle **201** may further comprise the battery case, particularly the high-rigidity battery case **233,** which store the first battery **231** positioned behind the rear seats **S2** and the second battery **232** positioned between the rear seats **S2.**

This battery case **233** may be integrally formed in the roughly T-letter shape in the plan view by the case rear portion **234** which extends from the outward side of one of the rear seats **S2** to the outward side of the other rear seat **S2** in the vehicle width direction and stores the first battery **231** and the case front portion **235** which extends forward from the case rear portion **234** through a space between the rear seats **S2** and stores the second battery **232.**

Further, the case rear portion **234** of the battery case **233** may be fixed to a pair of high-rigidity portions of the vehicle body (the rear side frame **204** and the damper support members **213)** which are positioned behind the rear seat **S2.**

Moreover, the case front portion **235** of the battery case **233** may be fixed to the high-rigidity portions of the vehicle body (the closed-cross section portion **C1** formed by the second floor cross member **209,** the closed-cross section portion **C3** formed by the fastening bracket **217,** and the closed-cross section portion **C2** formed by the second inside attachment portion **209b)** which are positioned before the seatbacks of the rear seats **S2.**

According to this structure, the battery volume of the electromotive vehicle **201** can be ensured by the first and second batteries **231, 232** arranged in the cabin **R.** Herein, since these batteries **231, 232** are stored and held by the high-rigidity battery case **233,** the present cabin structure of the electromotive vehicle **201** can protect these batteries **231, 232** from an unpredicted outer force.

Also, since the case rear portion **234** of the battery case **233** is fixed to the high-rigidity portions of the vehicle which are positioned behind the rear seats **S2,** the present cabin structure of the electromotive vehicle **201** can connect, in the vehicle width direction, portions which are close to load-input points of the vehicle body where an input load from the rear wheel is inputted by the case rear portion **234.**

Additionally, since the case rear portion **234** is fixed to the high-rigidity portion of the vehicle body which is positioned before the seatbacks of the rear seats **S2** via the case front portion **235,** the cabin structure of the electromotive vehicle **201** can prevent that the case rear portion **234** has bending or torsion due to the input load from the rear wheel. Thereby, the cabin structure of the electromotive vehicle 201 can make the battery case **233** serve as the frame member to reinforce the vehicle body, so that the bending rigidity or the torsional rigidity of the vehicle body can be improved.

Moreover, the cabin structure of the electromotive vehicle **201** can suppress the vehicle's weight compared to a case where the portions of the vehicle body which are close to the load-input points are interconnected, in the vehicle width direction, by using a different connecting member from the battery case **233.** Accordingly, the cabin structure of the electromotive vehicle **201** can compatibly attain ensuring the battery volume and improving the vehicle-body rigidity, suppressing the vehicle's weight increase.

Also, the cabin structure of the electromotive vehicle **201** may have the rear floor panel 206 forming the floor surface of the baggage compartment **R2** which is positioned on the rearward side of the front floor panel **205.** The first battery **231** may be arranged above the rear floor panel **206.**

The case rear portion **234** of the battery case **233** may be fixed to the high-rigidity portions (the rear side frame **204** and the damper support member **213)** which are adjacent, in the vehicle width direction, to the rear floor panel **206.**

According to this structure, the case rear portion **234** of the battery case **233** can be fixed closer to the right-and-left load-input points in the cabin **R** where the passenger compartment **R1** and the baggage compartment **R2** are integrally formed, for example. Thereby, the cabin structure of the electromotive vehicle **201** can securely make the battery case **233** serve as the frame member to reinforce the vehicle body, thereby improving the vehicle-body rigidity.

The cabin structure of the electromotive vehicle **201** may further have the pair of right-and-left rear side frames **204** where the end portions, in the vehicle width direction, of the rear floor panel **206** are joined. The case rear portion **234** of the battery case **233** is fixed to the right-and-left rear side frames **204** at both end portions, in the vehicle width direction, thereof.

According to this structure, since the case rear portion **234** of the battery case **233** is fixed to the rear side frames **204** as an existing high-rigidity portion of the vehicle body, it is unnecessary to provide any other additional high-rigidity portion in the baggage compartment **R2.**

Further, since the rear side frames **204** where the input load easily acts are interconnected, in the vehicle width direction, by the case rear portion **234,** the cabin structure of the electromotive vehicle **201** can securely suppress the vehicle body's torsion to be caused by the input load from the rear wheel by means of the battery case **233.**

Also, the cabin structure of the electromotive vehicle **201** may comprise the damper support member **213** which is positioned close to the outward side of the rear floor panel **206** and supports the upper end of the rear suspension damper. The case rear portion **234** of the battery case **233** is fixed to the damper support member **213** at the end portion, in the vehicle width direction, thereof.

According to this structure, since the case rear portion **234** of the battery case **233** is fixed to the damper support member **213** as the existing high-rigidity portion, any other additional high-rigidity portion is unnecessary in the baggage compartment **R2.** Moreover, since the damper support members **213** where the input load from the rear wheel directly acts is interconnected, in the vehicle width direction, by the case rear portion **234,** the cabin structure of the electromotive vehicle **201** can suppress the vehicle body's torsion to be caused by the input load from the rear wheel by means of the battery case **233** more securely.

Meanwhile, the case front portion **235** of the battery case **233** may extend through the space between the rear seats **S2,** and has the longitudinal length such that the foot space of the passenger seated in the rear seat **S2** is divided, in the vehicle width direction, thereby. According to this structure, the battery volume can be ensured by utilizing the space between the rear seats **S2,** and the independent seat spaces can be formed by the case front portion **235** separating the right-and-left rear seats **S2.**

Further, by covering the case front portion **235** with the rear-seat center console **221,** the cabin structure of the electromotive vehicle **201** can properly prevent deterioration of appearance between the right-and-left rear seats **S2,** which may be caused by the case front portion **235** of the battery case **233,** and also improve the livability of the passenger and the high-quality feeling in the rear part of the passenger compartment **R1.**

The case front portion **235** of the battery case **233** may be fixed to the second inside attachment portions **209b** to attach the front seats **S1.** According to this structure, since the case front portion **235** of the battery case **233** is fixed to the second inside attachment portions **209b** as the existing high-rigidity portions, it is unnecessary to provide any other additional high-rigidity portions in the passenger compartment **R1.** Accordingly, the cabin structure of the electromotive vehicle **201** can improve the vehicle-body rigidity without increasing the vehicle weight.

The cabin structure of the electromotive vehicle **201** may further comprise the pair of right-and-left side sills **203** extending in the vehicle longitudinal direction and joined to the both-side end portions, in the vehicle width direction, of the front floor panel **205** and the second floor cross members **209** interconnecting the side sills **203** in the vehicle width direction and forming the closed-cross sections extending in the vehicle width direction together with the front floor panel **205.**

The case front portion **235** of the battery case **233** may be fixed to the closed-cross sections formed by the front floor panel **205** and the second floor cross members **209.**

According to this structure, since the case front portion **235** of the battery case **233** is fixed to the closed-cross section portions as the existing high-rigidity portions, it is unnecessary to provide any other additional high-rigidity portions in the passenger compartment **R1.** Accordingly, the cabin structure of the electromotive vehicle **201** can improve the vehicle-body rigidity without increasing the vehicle weight.

Further, the front floor panel **205** may comprise the tunnel portion **251a** protruding upward and extending in the vehicle longitudinal direction at the central portion, in the vehicle width direction, thereof. Herein, the case front portion **235** of the battery case **233** is fixed to the high-rigidity portions (the closed-cross section portion **C3** formed by the fastening backet **217)** which are arranged above the tunnel portion **251a** and provided at the tunnel portion **251a.**

According to this structure, even in a case where the front floor panel **205** is provided with the tunnel portion **251a,** the case front portion **235** of the battery case **233** can be supported securely, thereby improving the vehicle-body rigidity securely.

## Claims

1. A cabin structure of a vehicle (V; 201), which is provided with a floor (1; 205, 206) forming a bottom face of a cabin (2; R), right-and-left front seats (27, 28; S1, S1) arranged to be laterally separated above a front part of the floor (1; 205), a front-seat center console (50; 214) interposed between the right-and-left front seats (27, 28; S1, S1), right-and-left rear seats (30, 31; S2, S2) arranged to be laterally separated above a rear part of the floor (1; 205) behind a kick-up portion (12; 252) and configured to be forward foldable, and a rear-seat center console (70; 221) interposed between the right-and-left rear seats (30, 31; S2, S2), comprising:
a first battery for drive (41; 231) provided above a baggage-compartment part of the floor (1; 206) behind seatbacks (30B, 31B) of the rear seats (30, 31; S2, S2) and extending in a vehicle width direction; and
a second battery for drive (42; 232) provided above a part of the floor (1; 205) between the right-and-left rear seats (30, 31; S2, S2) and extending in a vehicle longitudinal direction,
wherein the first and second batteries (41, 42; 231, 232) are arranged in a T-letter shape in a plan view, right-and-left both end portions of the first battery (41; 231) are fixed to the baggage-compartment part of the floor (1; 206), a front end portion (44F) of the second battery (42; 232) extending forward beyond the kick-up portion (12; 252) toward an inside of the front-seat center console (50; 214) is fixed to the floor (1; 205), and each back face portion (30Bu, 31Bu) of the respective seatbacks (30B, 31B) of the right-and-rear rear seats (30, 31; S2, S2) which are positioned in a forward-folded state and an upper face portion (43u; 234) of the first battery (41; 231) are configured to form a substantially flat and/or enlarged floor surface of a baggage compartment (2a; R2).

2. The cabin structure of the vehicle (V) of claim 1, further comprising a middle seatback portion (32) provided between the right-and-left rear seats (30, 31) and configured to be forward folded onto an upper face of the rear-seat center console (70), wherein longitudinal thickness of the middle seatback portion (32) in an upright position is smaller than that of each of the seatbacks (30B, 31B) of the right-and-left rear seats (30, 31) in the upright position.

3. The cabin structure of the vehicle (V) of claim 2, wherein a back face portion (32u) of the middle seatback portion (32) positioned in a forward-folded state and each back face portion (30Bu, 31Bu) of the respective seatbacks (30B, 31B) of the right-and-left rear seats (30, 31) positioned in in the forward-folded state are configured to form a flat surface extending in the vehicle width direction.

4. The cabin structure of the vehicle (V) of claim 2 or 3, wherein an upper portion of the rear-seat center console (70) is provided with a seatback placement portion (711) where the forward-folded middle seatback portion (32) is received and a protrusion portion (80) which is configured to protrude in front of the seatback placement portion (711), a function panel configured to provide an input/output function to a passenger seated in the rear seat is arranged at a portion (81) of the protrusion portion (80) which is configured to face the passenger seated in the rear seat (30,31), and the function panel is configured to be covered with the middle seatback portion (32) positioned in the forward-folded state.

5. The cabin structure of the vehicle (V) of any one of the preceding claims, wherein a rear portion of the front-seat center console (50) and the front end portion (44F) of the second battery (42) are fixed to a central portion, in the vehicle width direction, of the floor (1) by a common attaching member (67).

6. The cabin structure of the vehicle (V) of any one of the preceding claims, wherein the front-seat center console (50) comprises an object storage portion (53) which is configured to open upward and an air-conditioning discharge port (60) for the rear seat which is arranged behind the object storage portion (53), the front end portion (44F) of the second battery (42) is positioned close to a rear end portion of the object storage portion (53), and the air-conditioning discharge port (60) is positioned above the front end portion (44F) of the second battery (42).

7. The cabin structure of the vehicle (V) of claim 6, wherein a duct (62) configured to introduce conditioning air from an air-conditioning unit (100) provided at a front part of the cabin (2) to the air-conditioning discharge port (60) for the rear seat is arranged inside the front-seat center console (50), the object storage portion (53) is formed in a cylindrical shape with a bottom, which includes a bottom face portion (531) and right-and-left side wall portions (532), and the duct (62) is configured to extend from below the object storage portion (53) to the air-conditioning discharge port (60) for the rear seat, passing through a space between a side face portion of the front-seat center console (50) and the side wall portion (532) of the object storage portion (53).

8. The cabin structure of the vehicle (V) of any one of the preceding claims, wherein the first battery (41) includes a first battery case (43) which is configured to store a first battery pack, and the second battery (42) includes a second battery case (44) which is configured to store a second battery pack.

9. The cabin structure of the vehicle (201) of any one of the preceding claims, further comprising an aluminum-made battery case (233) in which a case rear portion (234) configured to store the first battery (231) and a case front portion (235) configured to store the second battery (232) are integrally formed substantially in the T-letter shape in the plan view, wherein the case rear portion (234) is fixed to a pair of right-and-left high-rigidity vehicle-body portions (204, 213) which are located in back of the right-and-left rear seats (S2), and the case front portion (235) is fixed to another pair of right-and-left high-rigidity vehicle-body portions (C1, C2, C3) which are located in front of the seatbacks of the right-and-left rear seats (S2).

10. The cabin structure of the vehicle (201) of claim 9, wherein both end portions, in the vehicle width direction, of the case rear portion (234) of the battery case (233) are fixed to right-and-left rear side frames (204) of the vehicle (201).

11. The cabin structure of the vehicle (201) of claim 9 or 10, further comprising right-and-left damper support portions (213) configured to support respective upper ends of right-and-left rear-suspension dampers, wherein the both end portions, in the vehicle width direction, of the case rear portion (234) of the battery case (233) are fixed to the right-and-left damper support portions (213).

12. The cabin structure of the vehicle (201) of any one of claims 9 to 11, wherein the floor (205) is provided with a floor tunnel (251a) protruding upward and extending in the vehicle longitudinal direction substantially at a center, in the vehicle width direction, of the floor (205), and a front end portion of the case front portion (235) of the battery case (233) is fixed to the floor tunnel (251a) or a high-rigidity portion (C3) of the floor tunnel (251a).

13. A vehicle (V; 201) comprising the cabin structure of any one of the preceding claims.

14. A method of manufacturing a vehicle (V; 201), comprising:
providing a floor (1; 205, 206) forming a bottom face of a cabin (2; R);
arranging right-and-left front seats (27, 28; S1, S1) to be laterally separated above a front part of the floor (1; 205);
interposing a front-seat center console (50; 214) between the right-and-left front seats (27, 28; S1, S1);
arranging right-and-left rear seats (30, 31; S2, S2) to be laterally separated above a rear part of the floor (1; 205) behind a kick-up portion (12; 252), wherein the right-and-left rear seats (30, 31; S2, S2) are configured to be forward foldable;
interposing a rear-seat center console (70; 221) between the right-and-left rear seats (30, 31; S2, S2);
providing a first battery for drive (41; 231) above a baggage-compartment part of the floor (1; 206) behind seatbacks (30B, 31B) of the rear seats (30, 31; S2, S2), the first battery (41; 231) extending in a vehicle width direction;
providing a second battery for drive (42; 232) above a part of the floor (1; 205) between the right-and-left rear seats (30, 31; S2, S2), the second battery (42; 232) extending in a vehicle longitudinal direction;
arranging the first and second batteries (41, 42; 231, 232) in a T-letter shape in a plan view;
fixing right-and-left both end portions of the first battery (41; 231) to the baggage-compartment part of the floor (1; 206);
fixing a front end portion (44F) of the second battery (42; 232) extending forward beyond the kick-up portion (12; 252) toward an inside of the front-seat center console (50; 214) to the floor (1; 205); and
forming a substantially flat and/or enlarged floor surface of a baggage compartment (2a; R2) by each back face portion (30Bu, 31Bu) of the respective seatbacks (30B, 31B) of the right-and-rear rear seats (30, 31; S2, S2) which are positioned in a forward-folded state and an upper face portion (43u; 234) of the first battery (41; 231).

## Patentansprüche

1. Innenraumstruktur eines Fahrzeugs (V; 201), die mit einem Boden (1; 205, 206), der eine Unterseite eines Innenraums (2; R) ausbildet, rechten und linken Vordersitzen (27, 28; S1, S1), die angeordnet sind, um über einem vorderen Teil des Bodens (1; 205) seitlich getrennt zu sein, einer Vordersitz-Mittelkonsole (50; 214), die zwischen den rechten und linken Vordersitzen (27, 28; S1, S1) eingefügt ist, rechten und linken Rücksitzen (30, 31; S2, S2), die angeordnet sind, um über einem hinteren Teil des Bodens (1; 205) hinter einem Hochklappabschnitt (12; 252) seitlich getrennt zu sein und konfiguriert sind, um nach vorne faltbar zu sein, und einer Rücksitz-Mittelkonsole (70; 221) versehen ist, die zwischen den rechten und linken Rücksitzen (30, 31; S2, S2) eingefügt ist, umfassend:
eine erste Antriebsbatterie (41; 231), die über einem Gepäckablageteil des Bodens (1; 206) hinter den Rückenlehnen (30B, 31B) der Rücksitze (30, 31; S2, S2) bereitgestellt ist und sich in einer Fahrzeugbreitenrichtung erstreckt; und
eine zweite Antriebsbatterie (42; 232), die über einem Teil des Bodens (1; 205) zwischen den rechten und linken Rücksitzen (30, 31; S2, S2) bereitgestellt ist und sich in einer Fahrzeuglängsrichtung erstreckt,
wobei die erste und die zweite Batterie (41, 42; 231, 232) in einer Draufsicht in einer T-Form angeordnet sind, beide rechten und linken Endabschnitte der ersten Batterie (41; 231) an dem Gepäckablageteil des Bodens (1; 206) fixiert sind, ein vorderer Endabschnitt (44F) der zweiten Batterie (42; 232), der sich nach vorne über den Hochklappabschnitt (12; 252) zu einer Innenseite der Vordersitz-Mittelkonsole (50; 214) hin erstreckt, an dem Boden (1; 205) fixiert ist und jeder Rückseitenabschnitt (30Bu, 31Bu) der jeweiligen Rückenlehnen (30B, 31B) der rechten und hinteren Rücksitze (30, 31; S2, S2), die in einem nach vorne gefalteten Zustand positioniert sind, und ein Oberseitenabschnitt (43u; 234) der ersten Batterie (41; 231) konfiguriert sind, um eine im Wesentlichen ebene und/oder vergrößerte Bodenoberfläche einer Gepäckablage (2a; R2) auszubilden.

2. Innenraumstruktur des Fahrzeugs (V) nach Anspruch 1, ferner umfassend einen mittleren Rückenlehnenabschnitt (32), der zwischen den rechten und linken Rücksitzen (30, 31) bereitgestellt ist und konfiguriert ist, um nach vorne auf eine Oberseite der Rücksitz-Mittelkonsole (70) gefaltet zu werden, wobei eine Längsdicke des mittleren Rückenlehnenabschnitts (32) in einer aufrechten Position geringer als die jeder der Rückenlehnen (30B, 31B) der rechten und linken Rücksitze (30, 31) in der aufrechten Position ist.

3. Innenraumstruktur des Fahrzeugs (V) nach Anspruch 2, wobei ein Rückseitenabschnitt (32u) des mittleren Rückenlehnenabschnitts (32), der in einem nach vorne gefalteten Zustand positioniert ist, und jeder Rückseitenabschnitt (30Bu, 31Bu) der jeweiligen Rückenlehnen (30B, 31B) der rechten und linken Rücksitze (30, 31), die in dem nach vorne gefalteten Zustand positioniert sind, konfiguriert sind, um eine ebene Oberfläche auszubilden, die sich in der Fahrzeugbreitenrichtung erstreckt.

4. Innenraumstruktur des Fahrzeugs (V) nach Anspruch 2 oder 3, wobei ein oberer Abschnitt der Rücksitz-Mittelkonsole (70) mit einem Rückenlehnen-Platzierungsabschnitt (711), in dem der nach vorne gefaltete mittlere Rückenlehnenabschnitt (32) aufgenommen wird, und einem Vorsprungsabschnitt (80) versehen ist, der konfiguriert ist, um vor dem Rückenlehnen-Platzierungsabschnitt (711) vorzustehen, wobei ein Funktionsfeld, das konfiguriert ist, um eine Eingabe-/Ausgabefunktion an einen auf dem Rücksitz sitzenden Passagier bereitzustellen, an einem Abschnitt (81) des Vorsprungsabschnitts (80) angeordnet ist, der konfiguriert ist, um dem auf dem Rücksitz (30,31) sitzenden Passagier zugewandt zu sein, und das Funktionsfeld konfiguriert ist, um mit dem mittleren Rückenlehnenabschnitt (32) abgedeckt zu werden, der in dem nach vorne gefalteten Zustand positioniert ist.

5. Innenraumstruktur des Fahrzeugs (V) nach einem der vorstehenden Ansprüche, wobei ein hinterer Abschnitt der Vordersitz-Mittelkonsole (50) und der vordere Endabschnitt (44F) der zweiten Batterie (42) an einem mittleren Abschnitt, in der Fahrzeugbreitenrichtung, des Bodens (1) durch ein gemeinsames Befestigungselement (67) fixiert sind.

6. Innenraumstruktur des Fahrzeugs (V) nach einem der vorstehenden Ansprüche, wobei die Vordersitz-Mittelkonsole (50) einen Objektlagerabschnitt (53), der konfiguriert ist, um nach oben zu öffnen, und eine Klimaanlagen-Auslassöffnung (60) für den Rücksitz umfasst, die hinter dem Objektlagerabschnitt (53) angeordnet ist, wobei der vordere Endabschnitt (44F) der zweiten Batterie (42) nahe einem hinteren Endabschnitt des Objektlagerabschnitts (53) positioniert ist, und der Klimaanlagen-Auslassanschluss (60) über dem vorderen Endabschnitt (44F) der zweiten Batterie (42) positioniert ist.

7. Innenraumstruktur des Fahrzeugs (V) nach Anspruch 6, wobei ein Kanal (62), der konfiguriert ist, um Klimaluft von einer Klimaanlageneinheit (100), die in dem vorderen Teil des Innenraums (2) bereitgestellt ist, zu der Klimaanlagen-Auslassöffnung (60) für die Rücksitze zu leiten, innerhalb der Vordersitz-Mittelkonsole (50) angeordnet ist, der Objektablageabschnitt (53) in einer zylindrischen Form mit einem Boden ausgebildet ist, der einen Bodenflächenabschnitt (531) und rechte und linke Seitenwandabschnitte (532) einschließt, und der Kanal (62) konfiguriert ist, um sich von unterhalb des Objektablageabschnitts (53) zu der Klimaanlagen-Auslassöffnung (60) für die Rücksitze zu erstrecken, wobei er durch einen Raum zwischen einem Seitenflächenabschnitt der Vordersitz-Mittelkonsole (50) und dem Seitenwandabschnitt (532) des Objektablageabschnitts (53) passiert.

8. Innenraumstruktur des Fahrzeugs (V) nach einem der vorstehenden Ansprüche, wobei die erste Batterie (41) ein erstes Batteriegehäuse (43) einschließt, das konfiguriert ist, um ein erstes Batteriepaket aufzunehmen, und die zweite Batterie (42) ein zweites Batteriegehäuse (44) einschließt, das konfiguriert ist, um ein zweites Batteriepaket aufzunehmen.

9. Innenraumstruktur des Fahrzeugs (201) nach einem der vorstehenden Ansprüche, ferner umfassend ein aus Aluminium gefertigtes Batteriegehäuse (233), in dem ein hinterer Gehäuseabschnitt (234), der konfiguriert ist, um die erste Batterie (231) aufzunehmen, und ein vorderer Gehäuseabschnitt (235), der konfiguriert ist, um die zweite Batterie (232) aufzunehmen, in der Draufsicht im Wesentlichen in T-Form integral ausgebildet sind, wobei der hintere Gehäuseabschnitt (234) an einem Paar von rechten und linken hochsteifen Fahrzeugkörperabschnitten (204, 213) fixiert ist, die sich hinter den rechten und linken Rücksitzen (S2) befinden, und der vordere Gehäuseabschnitt (235) an einem anderen Paar von rechten und linken hochsteifen Fahrzeugkörperabschnitten (C1, C2, C3) fixiert ist, die sich vor den Rückenlehnen der rechten und linken Rücksitze (S2) befinden.

10. Innenraumstruktur des Fahrzeugs (201) nach Anspruch 9, wobei beide Endabschnitte, in der Fahrzeugbreitenrichtung, des hinteren Gehäuseabschnitts (234) des Batteriegehäuses (233) an rechten und linken hinteren Seitenrahmen (204) des Fahrzeugs (201) fixiert sind.

11. Innenraumstruktur des Fahrzeugs (201) nach Anspruch 9 oder 10, ferner umfassend rechte und linke Dämpferstützabschnitte (213), die konfiguriert sind, um die jeweiligen oberen Enden der rechten und linken Stoßdämpfer der Hinterradaufhängung zu stützen, wobei die beiden Endabschnitte, in der Fahrzeugbreitenrichtung, des hinteren Gehäuseabschnitts (234) des Batteriegehäuses (233) an den rechten und linken Dämpferstützabschnitten (213) fixiert sind.

12. Innenraumstruktur des Fahrzeugs (201) nach einem der Ansprüche 9 bis 11, wobei der Boden (205) mit einem Bodentunnel (251a) versehen ist, der nach oben vorsteht und sich in der Fahrzeuglängsrichtung im Wesentlichen in einer Mitte, in der Fahrzeugbreitenrichtung, des Bodens (205) erstreckt, und ein vorderer Endabschnitt des Gehäusevorderabschnitts (235) des Batteriegehäuses (233) an dem Bodentunnel (251a) oder einem hochsteifen Abschnitt (C3) des Bodentunnels (251a) fixiert ist.

13. Fahrzeug (V; 201), umfassend die Innenraumstruktur nach einem der vorstehenden Ansprüche.

14. Verfahren zum Herstellen eines Fahrzeugs (V; 201), umfassend:
Bereitstellen eines Bodens (1; 205, 206), der eine Unterseite eines Innenraums (2; R) ausbildet;
Anordnen der rechten und linken Vordersitze (27, 28; S1, S1), um über einem vorderen Teil des Bodens (1; 205) seitlich getrennt zu sein;
Einfügen einer Vordersitz-Mittelkonsole (50; 214) zwischen den rechten und linken Vordersitzen (27, 28; S1, S1);
Anordnen der rechten und linken Rücksitze (30, 31; S2, S2), um über einem hinteren Teil des Bodens (1; 205) hinter einem Hochklappabschnitt (12; 252) seitlich getrennt zu sein, wobei die rechten und linken Rücksitze (30, 31; S2, S2) konfiguriert sind, um nach vorne gefaltet zu werden;
Einfügen einer Rücksitz-Mittelkonsole (70; 221) zwischen den rechten und linken Rücksitzen (30, 31; S2, S2);
Bereitstellen einer ersten Antriebsbatterie (41; 231) über einem Gepäckablageteil des Bodens (1; 206) hinter Rückenlehnen (30B, 31B) der Rücksitze (30, 31; S2, S2), wobei sich die erste Batterie (41; 231) in einer Fahrzeugbreitenrichtung erstreckt;
Bereitstellen einer zweiten Antriebsbatterie (42; 232) über einem Teil des Bodens (1; 205) zwischen den rechten und linken Rücksitzen (30, 31; S2, S2), wobei sich die zweite Batterie (42; 232) in einer Fahrzeuglängsrichtung erstreckt;
Anordnen der ersten und zweiten Batterie (41, 42; 231, 232) in einer T-Form in einer Draufsicht;
Fixieren der beiden rechten und linken Endabschnitte der ersten Batterie (41; 231) an dem Gepäckablageteil des Bodens (1; 206);
Fixieren eines vorderen Endabschnitts (44F) der zweiten Batterie (42; 232), der sich nach vorne über den Hochklappabschnitt (12; 252) hinaus zu einer Innenseite der Vordersitz-Mittelkonsole (50; 214) hin erstreckt, an dem Boden (1; 205); und
Ausbilden einer im Wesentlichen ebenen und/oder vergrößerten Bodenoberfläche einer Gepäckablage (2a; R2) durch jeden Rückseitenabschnitt (30Bu, 31Bu) der jeweiligen Rückenlehnen (30B, 31B) der rechten und hinteren Rücksitze (30, 31; S2, S2), die in einem nach vorne gefalteten Zustand positioniert sind, und einen Oberseitenabschnitt (43u; 234) der ersten Batterie (41; 231).

## Revendications

1. Structure de cabine d'un véhicule (V ; 201), qui est pourvue d'un plancher (1 ; 205, 206) formant une face inférieure d'une cabine (2 ; R), de sièges avant (27, 28 ; S1, S1) droit et gauche disposés de manière à être séparés latéralement au-dessus d'une partie avant du plancher (1 ; 205), d'une console centrale de sièges avant (50 ; 214) interposée entre les sièges avant (27, 28 ; S1, S1) droit et gauche, de sièges arrière (30, 31 ; S2, S2) droit et gauche disposés de manière à être séparés latéralement au-dessus d'une partie arrière du plancher (1 ; 205) derrière une partie relevable (12 ; 252) et conçus pour pouvoir être repliés vers l'avant, et d'une console centrale de sièges arrière (70 ; 221) interposée entre les sièges arrière (30, 31 ; S2, S2) droit et gauche, comprenant :
une première batterie (41 ; 231) d'entraînement prévue au-dessus d'une partie de compartiment à bagages du plancher (1 ; 206) derrière des dossiers (30B, 31B) des sièges arrière (30, 31 ; S2, S2) et s'étendant dans une direction de largeur de véhicule ; et
une seconde batterie (42 ; 232) d'entraînement prévue au-dessus d'une partie du plancher (1 ; 205) entre les sièges arrière (30, 31 ; S2, S2) droit et gauche et s'étendant dans une direction longitudinale de véhicule,
dans laquelle les première et seconde batteries (41, 42 ; 231, 232) sont disposées en forme de lettre T dans une vue en plan, deux parties d'extrémité droite et gauche de la première batterie (41 ; 231) sont fixées à la partie de compartiment à bagages du plancher (1 ; 206), une partie d'extrémité avant (44F) de la seconde batterie (42 ; 232) s'étendant vers l'avant au-delà de la partie relevable (12 ; 252) vers un intérieur de la console centrale de sièges avant (50 ; 214) est fixée au plancher (1 ; 205), et chaque partie de face arrière (30Bu, 31Bu) des dossiers (30B, 31B) respectifs des sièges arrière (30, 31 ; S2, S2) droit et arrière qui sont positionnés dans un état replié vers l'avant et une partie de face supérieure (43u ; 234) de la première batterie (41 ; 231) sont conçues pour former une surface de plancher substantiellement plate et/ou élargie d'un compartiment à bagages (2a ; R2).

2. Structure de cabine du véhicule (V) selon la revendication 1, comprenant en outre une partie de dossier central (32) prévue entre les sièges arrière (30, 31) droit et gauche et conçue pour être repliée vers l'avant sur une face supérieure de la console centrale de sièges arrière (70), dans laquelle une épaisseur longitudinale de la partie de dossier central (32) dans une position verticale est inférieure à celle de chacun des dossiers (30B, 31B) des sièges arrière (30, 31) droit et gauche dans la position verticale.

3. Structure de cabine du véhicule (V) selon la revendication 2, dans laquelle une partie de face arrière (32u) de la partie de dossier central (32) positionnée dans un état replié vers l'avant et chaque partie de face arrière (30Bu, 31Bu) des dossiers (30B, 31B) respectifs des sièges arrière (30, 31) droit et gauche positionnés dans l'état replié vers l'avant sont conçues pour former une surface plate s'étendant dans la direction de largeur de véhicule.

4. Structure de cabine du véhicule (V) selon la revendication 2 ou 3, dans laquelle une partie supérieure de la console centrale de sièges arrière (70) est pourvue d'une partie de placement de dossier (711) dans laquelle la partie de dossier central (32) repliée vers l'avant est reçue et d'une partie en saillie (80) qui est conçue pour faire saillie à l'avant de la partie de placement de dossier (711), un panneau de fonctions conçu pour fournir une fonction d'entrée/de sortie à un passager assis sur le siège arrière est disposé au niveau d'une partie (81) de la partie en saillie (80) qui est conçue pour faire face au passager assis sur le siège arrière (30,31), et le panneau de fonctions est conçu pour être recouvert de la partie de dossier central (32) positionnée dans l'état replié vers l'avant.

5. Structure de cabine du véhicule (V) selon l'une quelconque des revendications précédentes, dans laquelle une partie arrière de la console centrale de sièges avant (50) et la partie d'extrémité avant (44F) de la seconde batterie (42) sont fixées à une partie centrale, dans la direction de largeur de véhicule, du plancher (1) par un élément de fixation commun (67).

6. Structure de cabine du véhicule (V) selon l'une quelconque des revendications précédentes, dans laquelle la console centrale de sièges avant (50) comprend une partie de stockage d'objets (53) qui est conçue pour s'ouvrir vers le haut et un orifice de décharge de climatisation (60) pour le siège arrière qui est disposé derrière la partie de stockage d'objets (53), la partie d'extrémité avant (44F) de la seconde batterie (42) est positionnée à proximité d'une partie d'extrémité arrière de la partie de stockage d'objets (53), et l'orifice de décharge de climatisation (60) est positionné au-dessus de la partie d'extrémité avant (44F) de la seconde batterie (42).

7. Structure de cabine du véhicule (V) selon la revendication 6, dans laquelle un conduit (62) conçu pour introduire de l'air conditionné à partir d'une unité de climatisation (100) prévue au niveau d'une partie avant de la cabine (2) vers l'orifice de décharge de climatisation (60) pour le siège arrière est disposé à l'intérieur de la console centrale de sièges avant (50), la partie de stockage d'objets (53) est formée en forme cylindrique avec un fond, qui comporte une partie de face inférieure (531) et des parties de paroi latérale (532) droite et gauche, et le conduit (62) est conçu pour s'étendre du dessous de la partie de stockage d'objets (53) vers l'orifice de décharge de climatisation (60) pour le siège arrière, en passant à travers un espace entre une partie de face latérale de la console centrale de sièges avant (50) et la partie de paroi latérale (532) de la partie de stockage d'objets (53).

8. Structure de cabine du véhicule (V) selon l'une quelconque des revendications précédentes, dans laquelle la première batterie (41) comporte un premier boîtier de batterie (43) qui est conçu pour stocker un premier bloc-batterie, et la seconde batterie (42) comporte un second boîtier de batterie (44) qui est conçu pour stocker un second bloc-batterie.

9. Structure de cabine du véhicule (201) selon l'une quelconque des revendications précédentes, comprenant en outre un boîtier de batterie (233) fait en aluminium dans lequel une partie arrière de boîtier (234) conçue pour stocker la première batterie (231) et une partie avant de boîtier (235) conçue pour stocker la seconde batterie (232) sont formées d'un seul tenant sensiblement en forme de lettre T dans la vue en plan, dans laquelle la partie arrière de boîtier (234) est fixée à une paire de parties de carrosserie à haute rigidité (204, 213) droite et gauche qui sont situées à l'arrière des sièges arrière (S2) droit et gauche, et la partie avant de boîtier (235) est fixée à une autre paire de parties de carrosserie à haute rigidité (C1, C2, C3) droite et gauche qui sont situées à l'avant des dossiers des sièges arrière (S2) droit et gauche.

10. Structure de cabine du véhicule (201) selon la revendication 9, dans laquelle deux parties d'extrémité, dans la direction de largeur de véhicule, de la partie arrière de boîtier (234) du boîtier de batterie (233) sont fixées à des cadres latéraux arrière (204) droit et gauche du véhicule (201).

11. Structure de cabine du véhicule (201) selon la revendication 9 ou 10, comprenant en outre des parties de support d'amortisseur (213) droite et gauche conçues pour soutenir des extrémités supérieures respectives d'amortisseurs de suspension arrière droit et gauche, dans laquelle les deux parties d'extrémité, dans la direction de largeur de véhicule, de la partie arrière de boîtier (234) du boîtier de batterie (233) sont fixées aux parties de support d'amortisseur (213) droite et gauche.

12. Structure de cabine du véhicule (201) selon l'une quelconque des revendications 9 à 11, dans laquelle le plancher (205) est pourvu d'un tunnel de plancher (251a) faisant saillie vers le haut et s'étendant dans la direction longitudinale de véhicule sensiblement au niveau d'un centre, dans la direction de largeur de véhicule, du plancher (205), et une partie d'extrémité avant de la partie avant de boîtier (235) du boîtier de batterie (233) est fixée au tunnel de plancher (251a) ou à une partie à haute rigidité (C3) du tunnel de plancher (251a).

13. Véhicule (V ; 201) comprenant la structure de cabine selon l'une quelconque des revendications précédentes.

14. Procédé de fabrication d'un véhicule (V ; 201), comprenant :
la fourniture d'un plancher (1 ; 205, 206) formant une face inférieure d'une cabine (2 ; R) ;
la disposition de sièges avant (27, 28 ; S1, S1) droit et gauche de manière qu'ils soient séparés latéralement au-dessus d'une partie avant du plancher (1 ; 205) ;
l'interposition d'une console centrale de sièges avant (50 ; 214) entre les sièges avant (27, 28 ; S1, S1) droit et gauche ;
la disposition de sièges arrière (30, 31 ; S2, S2) droit et gauche de manière qu'ils soient séparés latéralement au-dessus d'une partie arrière du plancher (1 ; 205) derrière une partie relevable (12 ; 252), dans lequel les sièges arrière (30, 31 ; S2, S2) droit et gauche sont conçus pour pouvoir être repliés vers l'avant ;
l'interposition d'une console centrale de sièges arrière (70 ; 221) entre les sièges arrière (30, 31 ; S2, S2) droit et gauche ;
la fourniture d'une première batterie (41 ; 231) d'entraînement au-dessus d'une partie de compartiment à bagages du plancher (1 ; 206) derrière des dossiers (30B, 31B) des sièges arrière (30, 31 ; S2, S2), la première batterie (41 ; 231) s'étendant dans une direction de largeur de véhicule ;
la fourniture d'une seconde batterie (42 ; 232) d'entraînement au-dessus d'une partie du plancher (1 ; 205) entre les sièges arrière (30, 31 ; S2, S2) droit et gauche, la seconde batterie (42 ; 232) s'étendant dans une direction longitudinale de véhicule ;
la disposition des première et seconde batteries (41, 42 ; 231, 232) en forme de lettre T dans une vue en plan ;
la fixation de deux parties d'extrémité droite et gauche de la première batterie (41 ; 231) à la partie de compartiment à bagages du plancher (1 ; 206) ;
la fixation d'une partie d'extrémité avant (44F) de la seconde batterie (42 ; 232) s'étendant vers l'avant au-delà de la partie relevable (12 ; 252) vers un intérieur de la console centrale de sièges avant (50 ; 214) au plancher (1 ; 205) ; et
la formation d'une surface de plancher substantiellement plate et/ou élargie d'un compartiment à bagages (2a ; R2) par chaque partie de face arrière (30Bu, 31Bu) des dossiers (30B, 31B) respectifs des sièges arrière (30, 31 ; S2, S2) droit et arrière qui sont positionnés dans un état replié vers l'avant et une partie de face supérieure (43u ; 234) de la première batterie (41 ; 231).
